# EUROPEAN PATENT APPLICATION

(11) **EP 4 492 899 A1**
(43) Date of publication of application: **15.01.2025**
(21) Application number: 22930809.3
(22) Date of filing: 09.03.2022
(51) Int. Cl.: H04W 72/12, H04W 72/04

(54) **TERMINAL, WIRELESS COMMUNICATION METHOD, AND BASE STATION**

(71) Applicant: NTT DOCOMO, INC., Chiyoda-ku Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2022/010322
(87) International publication number: WO 2023/170826

(57) **Abstract**

A terminal according to an aspect of the present disclosure includes: a receiving section that receives first configuration information related to a physical uplink control channel (PUCCH), second configuration information related to a physical uplink shared channel (PUSCH), and third configuration information related to uplink simultaneous transmission using multiple panels; and a control section that controls, based on the first configuration information, the second configuration information, and the third configuration information, assumption related to transmission of the PUSCH and the PUCCH in the same time domain and transmission of at least one of the PUSCH and the PUCCH. An aspect of the present disclosure enables UL transmission to be appropriately controlled even when the UL transmission is performed using multiple panels.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement, and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and the like) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In the future radio communication systems, a UE can use one of multiple panels (or plurality of beams) for uplink (UL) transmission. For Rel. 18 or later versions, in order to improve UL throughput/reliability, it is under study to support simultaneous UL transmission using multiple panels (for example, simultaneous multi-panel UL transmission (SiMPUL)), for one or more transmission/reception points (TRPs).

However, studies have not sufficiently been made on how to control UL transmission (for example, simultaneous UL transmission) using multiple panels. Unless UL transmission using multiple panels is appropriately performed, system performance degradation such as reduction in throughput may be caused.

In view of this, the present disclosure has one object to provide a terminal, a radio communication method, and a base station that enable appropriate control of UL transmission even when the UL transmission is performed using multiple panels.

### Solution to Problem

A terminal according to an aspect of the present disclosure includes: a receiving section that receives first configuration information related to a physical uplink control channel (PUCCH), second configuration information related to a physical uplink shared channel (PUSCH), and third configuration information related to uplink simultaneous transmission using multiple panels; and a control section that controls, based on the first configuration information, the second configuration information, and the third configuration information, assumption related to transmission of the PUSCH and the PUCCH in the same time domain and transmission of at least one of the PUSCH and the PUCCH.

### Advantageous Effects of Invention

An aspect of the present disclosure enables UL transmission to be appropriately controlled even when the UL transmission is performed using multiple panels.

### Brief Description of Drawings

[FIG. 1] FIG. 1 is a diagram to show an example of association between precoder types and TPMI indices.
[FIG. 2] FIGS. 2A to 2C are each a diagram to show an example of PUSCH transmission using multiple panels.
[FIG. 3] FIGS. 3A and 3B are each a diagram to show an example of UL transmission control based on priorities.
[FIG. 4] FIG. 4 is a diagram to show another example of the UL transmission control based on the priorities.
[FIG. 5] FIG. 5 is a diagram to show an example of a method of simultaneous transmission of a PUSCH and a PUCCH using multiple panels.
[FIG. 6] FIG. 6 is a diagram to show an example of a PUSCH/PUCCH transmission method according to Option 3-1.
[FIG. 7] FIG. 7 is a diagram to show an example of a PUSCH/PUCCH transmission method according to Option 3-2.
[FIG. 8] FIG. 8 is a diagram to show an example of a PUSCH/PUCCH transmission method according to Option 3-3.
[FIG. 9] FIG. 9 is a diagram to show an example of a PUSCH/PUCCH transmission method according to Option 4-1.
[FIG. 10] FIG. 10 is a diagram to show an example of a PUSCH/PUCCH transmission method according to Option 4-2/4-3/4-4.
[FIG. 11] FIG. 11 is a diagram to show an example of a PUSCH/PUCCH transmission method according to Option 4-5.
[FIG. 12] FIG. 12 is a diagram to show an example of a schematic structure of a radio communication system according to one embodiment.
[FIG. 13] FIG. 13 is a diagram to show an example of a structure of a base station according to one embodiment.
[FIG. 14] FIG. 14 is a diagram to show an example of a structure of a user terminal according to one embodiment.
[FIG. 15] FIG. 15 is a diagram to show an example of a hardware structure of the base station and the user terminal according to one embodiment.
[FIG. 16] FIG. 16 is a diagram to show an example of a vehicle according to one embodiment.

### Description of Embodiments

### (PUSCH Precoder)

For NR, it is under study that a UE supports at least one of codebook (CB) based transmission and non-codebook (NCB) based transmission.

For example, it is under study that the UE determines a precoder (precoding matrix) for at least one of CB based uplink shared channel (Physical Uplink Shared Channel (PUSCH)) transmission and NCB based PUSCH transmission by using at least a reference signal for measurement (Sounding Reference Signal (SRS)) resource indicator (SRS Resource Indicator (SRI)).

In a case of CB based transmission, the UE may determine a precoder for the PUSCH transmission, based on an SRI, a transmitted rank indicator (TRI), a transmitted precoding matrix indicator (TPMI), and the like. In a case of NCB based transmission, the UE may determine a precoder for the PUSCH transmission, based on the SRI.

The UE may be notified of the SRI, the TRI, the TPMI, and the like by using downlink control information (DCI). The SRI may be specified by an SRS Resource Indicator field (SRI field) in the DCI or may be specified by a parameter "srs-ResourceIndicator" included in an RRC information element "ConfiguredGrantConfig" for a configured grant PUSCH. The TRI and the TPMI may be specified by precoding information and number of layers field ("Precoding information and number of layers" field) of the DCI.

The UE may report UE capability information related to a precoder type and be configured, by a base station, with the precoder type based on the UE capability information by higher layer signaling. The UE capability information may be precoder type information to be used by the UE in PUSCH transmission (which may be indicated by an RRC parameter "pusch-TransCoherence").

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. For example, the broadcast information may be master information blocks (MIBs), system information blocks (SIBs), and the like.

The UE may determine a precoder to be used for the PUSCH transmission, based on precoder type information (which may be indicated by an RRC parameter "codebookSubset") included in PUSCH configuration information notified by higher layer signaling ("PUSCH-Config" information element of RRC signaling). The UE may be configured with a subset of the PMI specified by the TPMI, by codebookSubset.

Note that the precoder type may be specified by any of or a combination of at least two of full coherent (fully coherent, coherent), partial coherent, and non-coherent (non coherent) (which may be indicated, for example, by a parameter such as "fullyAndPartialAndNonCoherent" or "partialAndNonCoherent."

Full coherent may mean that all the antenna ports to be used for transmission are synchronized (which may be expressed as being able to be matched in terms of phase, having the same precoder to be applied, and the like). Partial coherent may mean that some ports of the antenna ports to be used for transmission are synchronized but the ports and the other ports are not synchronized. Non-coherent may mean that the antenna ports to be used for transmission are not synchronized.

Note that a UE that supports the precoder type, full coherent, may be assumed to support the precoder types, partial coherent and non-coherent. A UE that supports the precoder type, partial coherent, may be assumed to support the precoder type, non-coherent.

The precoder type may be interpreted as coherency, PUSCH transmission coherence, a coherent type, a coherence type, a codebook type, a codebook subset, a codebook subset type, and the like.

The UE may determine a precoding matrix corresponding to the TPMI index obtained from DCI for scheduling UL transmission (for example, DCI format 0_1, this similarly applies below), from a plurality of precoders (which may be referred to as a precoding matrix, a codebook, and the like) for CB based transmission.

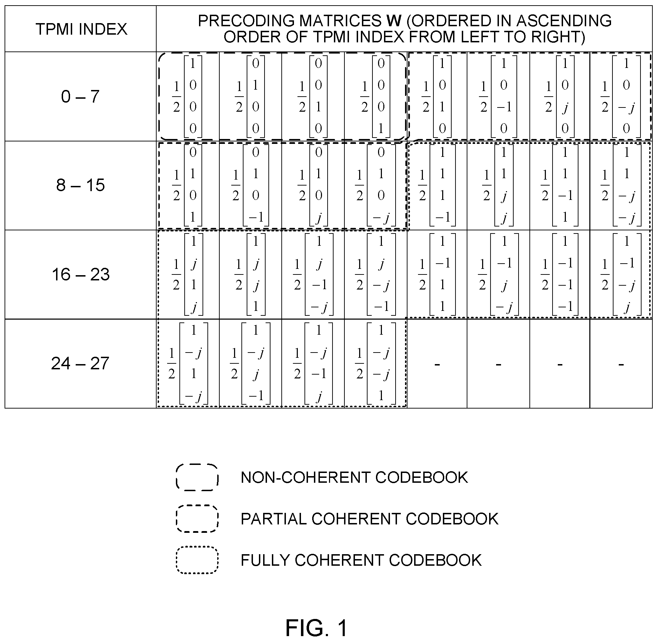

FIG. 1 is a diagram to show an example of association between precoder types and TPMI indices. FIG. 1 corresponds to a table of precoding matrices W for single-layer (rank 1) transmission using four antenna ports with DFT-s-OFDM (Discrete Fourier Transform spread OFDM, transform precoding is enabled).

In FIG. 1, when a precoder type (codebookSubset) is "fullyAndPartialAndNonCoherent," a UE is notified of a TPMI of any one of 0 to 27, for the single-layer transmission. When a precoder type is "partialAndNonCoherent," the UE is configured with a TPMI of any one of 0 to 11, for the single-layer transmission. When a precoder type is "nonCoherent," the UE is configured with a TPMI of any one of 0 to 3, for the single-layer transmission.

Note that, as shown in FIG. 1, a precoding matrix with only one of the components in each column being other than 0 may be referred to as a non-coherent codebook. A precoding matrix with only a certain number of components of (not all of) the components in each column being other than 0 may be referred to as a partial coherent codebook. A precoding matrix with none of the components in each column being 0 may be referred to as a fully coherent codebook.

Each of the non-coherent codebook and partial coherent codebook may be referred to as an antenna selection precoder. The fully coherent codebook may be referred to as a non-antenna selection precoder.

Note that, in the present disclosure, the partial coherent codebook may correspond to codebooks (i.e., codebooks of TPMI = 4 to 11 in a case of single-layer transmission with four antenna ports) obtained by eliminating codebooks corresponding to TPMIs specified for a UE configured with a non-coherent codebook subset (for example, an RRC parameter "codebookSubset" = "nonCoherent") from codebooks (precoding matrices) corresponding to TPMIs specified by DCI for codebook based transmission for a UE configured with a partial coherent codebook subset (for example, an RRC parameter "codebookSubset" = "partialAndNonCoherent").

Note that, in the present disclosure, the fully coherent codebook may correspond to codebooks (i.e., codebooks of TPMI = 12 to 27 in the case of single-layer transmission with four antenna ports) obtained by eliminating codebooks corresponding to TPMIs specified for a UE configured with the partial coherent codebook subset (for example, the RRC parameter "codebookSubset" = "partialAndNonCoherent") from codebooks (precoding matrices) corresponding to TPMIs specified by DCI for codebook based transmission for a UE configured with a fully coherent codebook subset (for example, an RRC parameter "codebookSubset" = "fullyAndPartialAndNonCoherent").

### (Spatial Relation for SRS and PUSCH)

The UE may receive information to be used for transmission of a reference signal for measurement (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example an RRC control element "SRS-Resource").

One SRS resource set may be related to a certain number of SRS resources (may group the certain number of SRS resources). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information of SRS usage.

Here, the SRS resource type may indicate any one of a periodic SRS (P-SRS), a semi-persistent SRS (SP-SRS), and an aperiodic SRS (A-SRS, AP-SRS). Note that the UE may transmit a P-SRS and an SP-SRS periodically (or periodically after activation) and transmit an A-SRS based on an SRS request of DCI.

The usage (RRC parameter "usage," L1 (Layer-1) parameter "SRS-SetUse") may be, for example, beam management (beamManagement), codebook based transmission (codebook (CB)), non-codebook based transmission (nonCodebook (NCB)), antenna switching (antennaSwitching), or the like. An SRS with codebook based transmission or non-codebook based transmission usage may be used to determine a precoder for codebook based or non-codebook based PUSCH transmission based on an SRI.

For example, in a case of codebook based transmission, the UE may determine a precoder for the PUSCH transmission based on an SRI, a transmitted rank indicator (TRI), and a transmitted precoding matrix indicator (TPMI). In a case of non-codebook based transmission, the UE may determine a precoder for the PUSCH transmission based on an SRI.

The SRS resource information may include an SRS resource ID (SRS-ResourceId), the number of SRS ports, an SRS port number, a transmission Comb, SRS resource mapping (for example, time and/or frequency resource position, resource offset, resource periodicity, the number of times of repetition, the number of SRS symbols, SRS bandwidth, and the like), hopping related information, an SRS resource type, a sequence ID, spatial relation information for an SRS, and the like.

The spatial relation information for an SRS (for example, an RRC information element "spatialRelationInfo") may indicate spatial relation information between a certain reference signal and the SRS. Such a certain reference signal may be at least one of a synchronization signal/broadcast channel (Synchronization Signal/Physical Broadcast Channel (SS/PBCH)) block, a channel state information reference signal (CSI-RS), and an SRS (for example, another SRS). The SS/PBCH block may be referred to as a synchronization signal block (SSB).

The spatial relation information for the SRS may include, as an index for the certain reference signal described above, at least one of an SSB index, a CSI-RS resource ID, and an SRS resource ID.

Note that, in the present disclosure, an SSB index, an SSB resource ID, and an SSBRI (SSB Resource Indicator) may be interchangeably interpreted. A CSI-RS index, a CSI-RS resource ID, and a CRI (CSI-RS Resource Indicator) may be interchangeably interpreted. An SRS index, an SRS resource ID, and an SRI may be interchangeably interpreted.

The spatial relation information for the SRS may include a serving cell index, a BWP index (BWP ID), and the like corresponding to the certain reference signal described above.

In NR, transmission of an uplink signal may be controlled based on presence or absence of beam correspondence (BC). The BC may be, for example, a capability for a certain node (for example, base station or UE) to determine a beam (transmit beam, Tx beam) to be used for transmission of a signal based on a beam (receive beam, Rx beam) to be used for reception of a signal.

Note that the BC may be referred to as transmit/receive beam correspondence (Tx/Rx beam correspondence), beam reciprocity, beam calibration, calibrated/non-calibrated, reciprocity calibrated/non-calibrated, degree of correspondence, degree of matching, or the like.

For example, without such BC, the UE may transmit an uplink signal (for example, PUSCH, PUCCH, SRS, or the like) by using a beam (spatial domain transmission filter) identical to that for an SRS (or SRS resource) indicated by a base station based on a result of measurement of one or more SRSs (SRS resources).

On the other hand, with the BC, the UE may transmit an uplink signal (for example, PUSCH, PUCCH, SRS, or the like) by using a beam (spatial domain transmission filter) identical to or corresponding to a beam (spatial domain reception filter) to be used for reception of a certain SSB or CSI-RS (or CSI-RS resource).

With respect to a certain SRS resource, when spatial relation information related to an SSB or CSI-RS and an SRS is configured (for example, with the BC), the UE may transmit the SRS resource by using a spatial domain filter (spatial domain transmission filter) the same as a spatial domain filter (spatial domain reception filter) for reception of the SSB or CSI-RS. In this case, the UE may assume that a UE receive beam for the SSB or CSI-RS is the same as a UE transmit beam for the SRS.

With respect to a certain SRS (target SRS) resource, when spatial relation information related to another SRS (reference SRS) and the SRS (target SRS) is configured (for example, without the BC), the UE may transmit the target SRS resource by using a spatial domain filter (spatial domain transmission filter) the same as a spatial domain filter (spatial domain transmission filter) for transmission of the reference SRS. In other words, in this case, the UE may assume that a UE transmit beam for the reference SRS is the same as a UE transmit beam for the target SRS.

Based on a value of a certain field (for example, an SRS resource indicator (SRI) field) in DCI (for example, DCI format 0_1), the UE may determine a spatial relation of a PUSCH scheduled by the DCI. Specifically, the UE may use, for the PUSCH transmission, spatial relation information (for example, the RRC information element "spatialRelationInfo") of an SRS resource determined based on the value (for example, SRI) of the certain field.

For a PUSCH, when codebook based transmission is used, two SRS resources may be configured for the UE by RRC and one of the two SRS resources may be indicated for the UE by DCI (a certain field of one bit). For a PUSCH, when non-codebook based transmission is used, four SRS resources may be configured for the UE by RRC and one of the four SRS resources may be indicated for the UE by DCI (a certain field of two bits). In order to use a spatial relation other than the two or four spatial relations configured by RRC, RRC reconfiguration is required.

Note that, for a spatial relation of an SRS resource to be used for a PUSCH, a DL-RS may be configured. For example, with respect to an SP-SRS, a spatial relation of a plurality of (for example, up to 16) SRS resources may be configured for the UE by RRC, and one of the plurality of SRS resources may be indicated for the UE by a MAC CE.

### (Transmission with Multiple Panels)

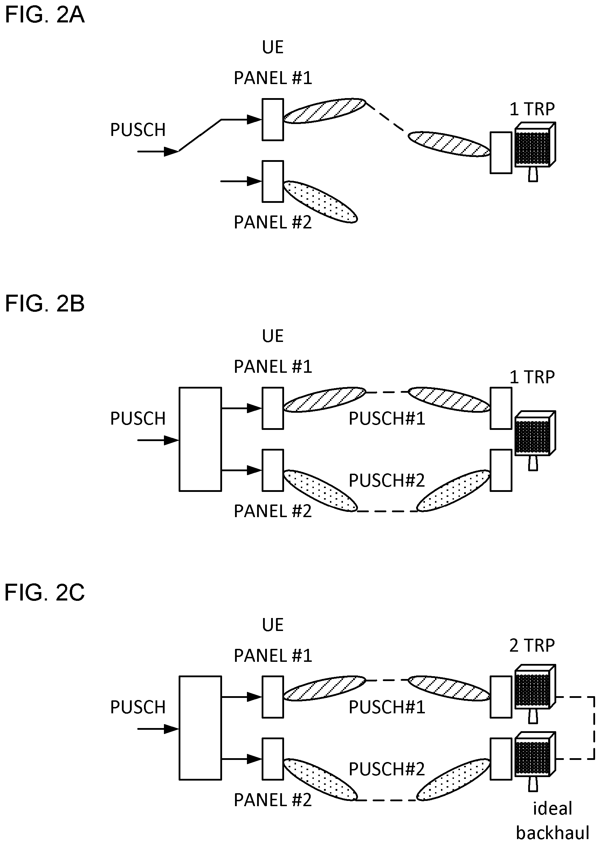

In a UE in Rel. 15 and Rel. 16, only one beam and panel are used for UL transmission at one time point (FIG. 2A). For Rel. 17, for improvement of UL throughput and reliability, simultaneous UL transmission with a plurality of beams and multiple panels for one or more TRPs is under study.

For simultaneous UL transmission using a plurality of beams and multiple panels, reception by one TRP with multiple panels (FIG. 2B), or reception by two TRPs with an ideal backhaul (FIG. 2C) is under study. A single PDCCH for scheduling of a plurality of PUSCHs (for example, simultaneous transmission of PUSCH #1 and PUSCH #2) is under study. Support for panel-specific transmission and introduction of a panel ID are under study.

A base station may configure or indicate panel-specific transmission for UL transmission by using UL TCI or a panel ID. The UL TCI (UL TCI state) may be based on signaling similar to DL beam indication supported in Rel. 15. A panel ID may be implicitly or explicitly applied to transmission of at least one of a target RS resource or a target RS resource set, a PUCCH, an SRS, and a PRACH. In a case where the panel ID is explicitly notified, the panel ID may be configured in at least one of a target RS, a target channel, and a reference RS (for example, a DL RS resource configuration or spatial relation information).

### (UL TCI state)

For Rel-16 NR, it is under study that a UL TCI state is used as a beam indication method in UL. Notification of the UL TCI state is similar to notification of a DL beam (DL TCI state) of a UE. Note that a DL TCI state and a TCI state for a PDCCH/PDSCH may be interchangeably interpreted.

A channel/signal (which may be referred to as a target channel/RS) for which the UL TCI state is configured (specified) may be, for example, at least one of a PUSCH (a DMRS of the PUSCH), a PUCCH (a DMRS of the PUCCH), a random access channel (Physical Random Access Channel (PRACH)), an SRS, and the like.

An RS (source RS) to have a QCL relationship with the channel/signal may be, a DL RS (for example, SSB, CSI-RS, TRS, or the like) or may be a UL RS (for example, SRS, SRS for beam management, or the like), for example.

In a UL TCI state, an RS to have a QCL relationship with the channel/signal may be associated with a panel ID for reception or transmission of the RS. The association may be explicitly configured (or specified) by higher layer signaling (for example, RRC signaling, MAC CE, or the like) or may be implicitly determined.

The correspondence between the RS and the panel ID may be configured being included in UL TCI state information or may be configured being included in at least one of resource configuration information, spatial relation information, and the like of the RS.

A QCL type indicated by the UL TCI state may be existing QCL types A to D, may be another QCL type, and may include a certain spatial relation, an associated antenna port (port index), or the like.

When an associated panel ID is specified (for example, specified by DCI) for a UL transmission, the UE may perform the UL transmission by using a panel corresponding to the panel ID. A panel ID may be associated with a UL TCI state. When a UL TCI state is specified (or activated) for a certain UL channel/signal, the UE may identify a panel to be used for transmission of the UL channel/signal in accordance with a panel ID associated with the UL TCI state.

### (Traffic Types)

In future radio communication systems (for example, NR), traffic types (also referred to as services, service types, communication types, use cases, or the like), such as further enhancement of mobile broadband (for example, enhanced Mobile Broadband (eMBB)), machine type communication that implements multiple simultaneous connection (for example, massive Machine Type Communications (mMTC), Internet of Things (IoT)), and high-reliable and low-latency communication (for example, Ultra-Reliable and Low-Latency Communications (URLLC)), are assumed. For example, in URLLC, lower latency and higher reliability in comparison to eMBB are required.

The traffic type may be identified based on at least one of the following in a physical layer.
- Logical channel having different priority
- Modulation and coding scheme (MCS) table (MCS index table)
- Channel quality indication (CQI) table
- DCI format
- (Radio network temporary indicator (RNTI (System Information-Radio Network Temporary Identifier))) used for scrambling (masking) of cyclic redundancy check (CRC) bits included in (added to) the DCI (DCI format)
- RRC (Radio Resource Control) parameter
- Specific RNTI (for example, an RNTI for URLLC, an MCS-C-RNTI, or the like)
- Search space
- Certain field in DCI (for example, a newly added field or reuse of an existing field)

Specifically, the traffic type of an HARQ-ACK for a PDSCH may be determined based on at least one of the following.
- MCS index table used for determination of at least one of a modulation order, a target code rate, and a transport block size (TBS) of the PDSCH (for example, whether to use MCS index table 3)
- RNTI used for CRC scrambling of DCI used for scheduling of the PDSCH (for example, which of C-RNTI or MCS-C-RNTI is used for the CRC scrambling)

The traffic type of an SR may be determined based on a higher layer parameter used as an identifier of the SR (SR-ID). The higher layer parameter may indicate whether the traffic type of the SR is eMBB or URLLC.

The traffic type of CSI may be determined based on configuration information (CSIreportSetting) related to a CSI report, a DCI type or DCI transmission parameter used for the trigger, or the like. The configuration information, the DCI type, or the like may indicate whether the traffic type of the CSI is eMBB or URLLC. The configuration information may be a higher layer parameter.

The traffic type of a PUSCH may be determined based on at least one of the following.
- MCS index table used for determination of at least one of a modulation order, a target code rate, and a TBS of the PUSCH (for example, whether to use MCS index table 3)
- RNTI used for CRC scrambling of DCI used for scheduling of the PUSCH (for example, which of C-RNTI or MCS-C-RNTI is used for the CRC scrambling)

The traffic type may be associated with a communication requirement (requirement or required condition such as latency and error rate), a data type (such as audio and data), and the like.

A difference between a requirement for URLLC and a requirement for eMBB may be in that the latency for URLLC is smaller than the latency for eMBB, or may be in that the requirement for URLLC includes a requirement of reliability.

For example, a requirement of user (U) plane latency for eMBB may include a requirement that the U plane latency of downlink is 4 ms and the U plane latency of uplink is 4 ms. On the other hand, a requirement of U plane latency for URLLC may include a requirement that the U plane latency of downlink is 0.5 ms and the U plane latency of uplink is 0.5 ms. A requirement of reliability for URLLC may include a requirement that the error rate of 32 bytes is 10-5 in U plane latency of 1 ms.

As enhanced Ultra Reliable and Low Latency Communications (eURLLC), enhancement of traffic reliability mainly for unicast data is under study. In the following, both of URLLC and eURLLC will be simply referred to as "URLLC," unless specified otherwise.

### (Configuration of Priorities)

For NR in Rel. 16 or later versions, it is under study to configure a plurality of priority levels (for example, two levels) for a certain signal or channel. For example, it is assumed that separate priorities are configured for respective signals or channels corresponding to different traffic types (also referred to as services, service types, communication types, use cases, or the like) for control of communication (for example, transmission control in collision and the like). This allows different priorities to be configured depending on the service types or the like for the same signal or channel to control the communication.

The priorities may be configured for at least one of a signal (for example, UCI such as an HARQ-ACK, a reference signal, or the like), a channel (PDSCH, PUSCH, PUCCH, or the like), a reference signal (for example, channel state information (CSI), sounding reference signal (SRS), or the like), a scheduling request (SR), and an HARQ-ACK codebook. The priority may be configured for each of a PUCCH to be used for transmission of an SR, a PUCCH to be used for transmission of an HARQ-ACK, and a PUCCH to be used for transmission of CSI.

For the priorities, a first priority (for example, high) and a second priority (for example, low) lower than the first priority may be defined. Alternatively, three or more levels of priorities may be configured.

For example, the priorities may be configured for an HARQ-ACK for a PDSCH to be dynamically scheduled, an HARQ-ACK for a semi-persistent PDSCH (SPS PDSCH), and an HARQ-ACK for SPS PDSCH release. Alternatively, the priorities may be configured for HARQ-ACK codebooks corresponding to these HARQ-ACKs. Note that, when the priority is configured for a PDSCH, the priority of the PDSCH may be interpreted as the priority of the HARQ-ACK for the PDSCH.

The priorities may be configured for a dynamic grant based PUSCH, a configured grant based PUSCH, and the like.

The base station may notify the UE of information related to the priority, by using at least one of higher layer signaling and DCI. For example, the priority of a scheduling request may be configured by a higher layer parameter (for example, schedulingRequestPriority). The priority of an HARQ-ACK for a PDSCH (for example, dynamic PDSCH) scheduled by DCI may be notified using the DCI. The priority of an HARQ-ACK for an SPS PDSCH may be configured by a higher parameter (for example, HARQ-ACK-Codebook-indicator-forSPS), or may be notified using DCI indicating activation of the SPS PDSCH. A P-CSI/SP-CSI to be transmitted on a PUCCH may be configured with a certain priority (for example, low). On the other hand, the priority of an A-CSI/SP-CSI to be transmitted on a PUSCH may be notified using DCI (for example, DCI for triggering or DCI for activation).

The priority of a dynamic grant based PUSCH may be notified by using DCI scheduling the PUSCH. The priority of a configured grant based PUSCH may be configured by a higher layer parameter (for example, priority). A P-SRS/SP-SRS and an A-SRS triggered by DCI (for example, DCI format 0_1/DCI format 2_3) may be configured with a certain priority (for example, low).

### (Priority Related to CSI Report)

In Rel-15/16 NR, a CSI report (which may be referred to as CSI feedback or the like) may relate to a priority value. For example, the priority value may be defined using a function Pri_{iCSI}(y, k, c, s). The priority may be interchangeably interpreted as a CSI report priority, a CSI priority, or the like.

For example, Pri_{iCSI}(y, k, c, s) may be calculated by the following equation (1). PriiCSI(y, k, c, s) = 2 · Ncells · Ms · y + Ncells · Ms · k + Ms · c + s

Here, y may be a value based on a CSI report type (A-CSI report, SP-CSI report, or P-CSI report) and a channel for the CSI report to be transmitted on (uplink shared channel (Physical Uplink Shared Channel (PUSCH)) or uplink control channel (Physical Uplink Control Channel (PUCCH))).

For example, y may be y = 0 for an A-CSI report transmitted on a PUSCH, y = 1 for an SP-CSI report transmitted on a PUSCH, y = 2 for an SP-CSI report transmitted on a PUCCH, or y = 3 for a P-CSI report transmitted on a PUCCH.

k may be a value based on whether a CSI report includes an L1-RSRP/SINR (for example, k = 0 when the CSI report includes an L1-RSRP/SINR, or k = 1 when the CSI report includes no L1-RSRP/SINR). c may be a serving cell index. s may be a report configuration ID (reportConfigID). Note that the L1-RSRP/L1-SINR may be configured for different CSI reports.

N_{cells} may be a value of the maximum number of serving cells to be configured (higher layer parameter "maxNrofServingCells"). Mₛ may be a value of the maximum number of CSI report configurations to be configured (higher layer parameter "maxNrofCSI-ReportConfigurations").

When a value of Pri_{iCSI}(y, k, c, s) related to a first CSI report is smaller than a value of Pri_{iCSI}(y, k, c, s) related to a second CSI report, this may mean that the first CSI report has a high priority as compared with the second CSI report.

With Equation 1, for the same amount of report in the same serving cell, the priority is higher in this order: A-CSI on PUSCH > SP-CSI on PUSCH > SP-CSI on PUCCH > P-CSI on PUCCH.

In a case that time occupancies of two physical channels scheduled to transmit two CSI reports overlap with each other in at least one OFDM symbol and that the two CSI reports are transmitted on the same carrier, this may be referred to as collision of the two CSI reports.

In Rel-15/16 NR, in a case that a UE is configured to transmit two colliding CSI reports and that the respective CSI report types are different from each other (in other words, the y values of the CSI reports are different from each other), one CSI report with a higher Pri_{iCSI}(y, k, c, s) may not be transmitted and the other CSI report with a lower Pri_{iCSI}(y, k, c, s) may be transmitted, except a case where both the CSI reports are CSI on PUCCH.

In Rel-15/16 NR, in a case that a UE is configured to transmit two colliding CSI reports, and that the respective CSI report types are the same as each other or that the respective CSI reports are different from each other and both the CSI reports are CSI on PUCCH, both the CSI reports may be multiplexed or one of the CSI reports may be dropped based on Pri_{iCSI}(y, k, c, s).

### (Overlap in UL Transmission)

When a plurality of UL signals/UL channels overlap (or have collision) with each other, the UE may control the UL transmission based on the priorities.

Overlap between a plurality of UL signals/UL channels may be a case where time resources (or time resources and frequency resources) of the plurality of UL signals/UL channels overlap with each other, or a case where transmission timings of the plurality of UL signals/UL channels overlap with each other. The time resources may be interpreted as the time domain or time-domain. The time resources may be symbol, slot, sub-slot, or subframe units.

Overlap between a plurality of UL signals/UL channels in the same UE (for example, intra-UE) may mean that the plurality of UL signals/UL channels overlap with each other in at least the same time resource (for example, symbol). Collision between UL signals/UL channels in different UEs (for example, inter-UE) may mean that the plurality of UL signals/UL channels overlap with each other in the same time resource (for example, symbol) and frequency resource (for example, RB).

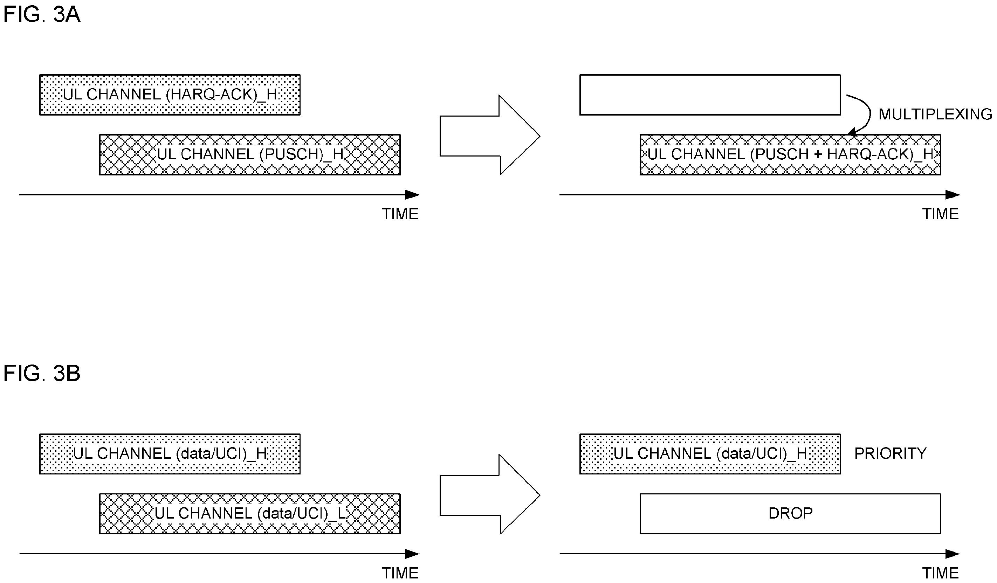

For example, when a plurality of UL signals/UL channels each having the same priority overlap with each other, the UE performs control to transmit the plurality of UL signals/UL channels multiplexed on one UL channel (see FIG. 3A).

FIG. 3A shows a case where an HARQ-ACK (or a PUCCH for HARQ-ACK transmission) configured with the first priority (high) and UL data/UL-SCH (or a PUSCH for UL data/UL-SCH transmission) configured with the first priority (high) overlap with each other. In this case, the UE multiplexes (maps) the HARQ-ACK on the PUSCH to transmit both the UL data and the HARQ-ACK.

When a plurality of UL signals/UL channels having different priorities overlap with each other, the UE may perform control to perform a UL transmission with a high priority (for example, prioritize a UL transmission with a high priority) and not to perform a UL transmission with a low priority (for example, drop a UL transmission with a low priority) (see FIG. 3B).

FIG. 3B shows a case where UL data/HARQ-ACK (or a UL channel for UL data/HARQ-ACK transmission) configured with the first priority (high) and UL data/HARQ-ACK (or a UL channel for UL data/HARQ-ACK transmission) configured with the second priority (low) overlap with each other. In this case, the UE performs control to drop the UL data/HARQ-ACK with the low priority and prioritize and transmit the UL data/HARQ-ACK with the high priority. Note that the UE may change (for example, postpone or shift) a transmission timing of the UL transmission with the low priority.

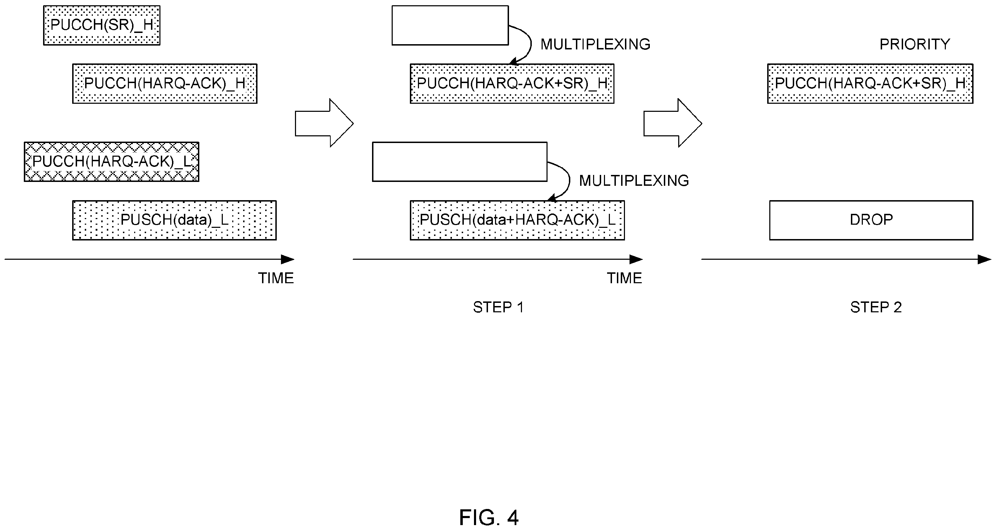

When more than two (or three or more) UL signals/UL channels overlap with each other in the time domain, the transmission may be controlled in two steps (see FIG. 4).

In step 1, between UL transmissions of the same priority, one UL channel is selected on which UL signals to be transmitted are multiplexed. In FIG. 4, an SR (or a PUCCH for SR transmission) and an HARQ-ACK (or a PUCCH for HARQ-ACK transmission) each having the first priority (high) may be multiplexed on a certain UL channel (here, the PUCCH for HARQ-ACK transmission). Similarly, an HARQ-ACK (or a PUCCH for HARQ-ACK transmission) and data (or a PUSCH for data/UL-SCH transmission) each having the second priority (low) may be multiplexed on a certain UL channel (here, the PUSCH).

In step 2, between UL transmissions having different priorities, control may be performed to prioritize and transmit a UL transmission with a high priority and to drop a UL transmission with a low priority. In FIG. 4, the PUCCH for the SR and HARQ-ACK transmission having the first priority (high) may be prioritized and transmitted, and the PUSCH for the HARQ-ACK and data transmission having the second priority (low) may be dropped.

As described above, the UE can solve collision between a plurality of UL transmissions having the same priority in step 1, and solve collision between a plurality of UL transmissions having different priorities in step 2.

### (Collision Handling for PUCCH and PUSCH)

In the following, specific processing (collision handling) when various types of UL channels/signals overlap with each other, defined in Rel. 16 or earlier versions, will be described.

When a PUCCH resource (for example, a PUCCH for an SR) does not overlap in time with a PUSCH transmission after multiplexing (mapping) of UCI (for example, an HARQ-ACK), the UE may transmit the PUCCH by using the PUCCH resource.

When the PUCCH resource overlaps in time with the PUSCH transmission, the UE may multiplex (map/piggyback) HARQ-ACK information/CSI report on the PUSCH. In this case, the UE need not transmit the SR.

The UE need not transmit a PUSCH overlapping in time with a PUCCH in a slot.

When a plurality of PUCCHs overlap with each other, the UE performs multiplexing of UCI and then selects one PUCCH. When the one PUCCH overlaps in time with a PUSCH, collision handling between the PUCCH and the PUSCH is performed.

### (simultaneous multi-panel UL transmission (SiMPUL))

For future radio communication systems (for example, Rel. 18 or later versions), in order to improve UL throughput/reliability, it is under study to support simultaneous UL transmission using multiple panels (for example, simultaneous multi-panel UL transmission (SiMPUL)), for one or more transmission/reception points (TRPs).

In the simultaneous UL transmission using the multiple panels, a UE may transmit a physical uplink control channel (PUCCH) and a physical uplink shared channel (PUSCH).

In Rel. 17, in a case where a plurality of (for example, two) PUCCH/PUSCH transmissions having different priorities overlap with each other (in the time domain), the UE initially solves overlap of a PUCCH/PUSCH transmission having a smaller (lower) priority index.

At this time, when multiplexing/mapping of pieces of UCI having different priorities is supported, firstly, the UE solves overlap of a PUCCH/PUSCH transmission having a greater (higher) priority index.

Secondly, the UE solves overlap between PUCCH transmissions having different priority indices.

Thirdly, the UE solves overlap between PUCCH and PUSCH transmissions having different priority indices.

When multiplexing/mapping of pieces of UCI having different priorities is not supported, the UE cancels a PUCCH/PUSCH having a smaller priority index in accordance with a specific rule.

Note that, in the present disclosure, a priority index may correspond to a traffic type. In the present disclosure, a PUCCH/PUSCH may be associated with a priority index and such association may be configured/indicated for a UE.

However, UE operation with respect to PUSCH/PUCCH transmissions overlapping with each other are not clear, in a case where simultaneous transmission using multiple panels for PUSCHs and PUCCHs (for example, PUCCHs/pieces of UCI having different priorities) is supported. As long as this is not clear, system performance degradation such as reduction in throughput may be caused.

In view of this, the inventors of the present invention came up with the idea of a method of appropriately controlling UL transmission even when the UL transmission is performed using multiple panels.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "be supported," "be configured," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, an antenna group, a UE capability value, a UE capability value set, a specific (pool) index included in a PUSCH configuration, a specific (pool) index included in a PUCCH configuration, a specific (pool) index included in an SRS configuration, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted. The UE capability value set may include, for example, the maximum number of SRS ports to be supported.

A spatial relation information Identifier (ID) (TCI state ID) and spatial relation information (TCI state) may be interchangeably interpreted. "Spatial relation information" may be interchangeably interpreted as "a set of spatial relation information," "one or a plurality of spatial relation information," or the like. The TCI state and the TCI may be interchangeably interpreted.

In the present disclosure, drop, stop, cancel, puncture, rate match, postpone, and the like may be interchangeably interpreted.

In the embodiments of the present disclosure, configuring multi-DCI using multi-TRP, providing no CORESET pool index (RRC parameter "coresetPoolIndex"), and providing a CORESET pool index (RRC parameter "coresetPoolIndex") of a first value (for example, 0) to one or more first CORESETs and providing a CORESET pool index (RRC parameter "coresetPoolIndex") of a second value (for example, 1) to one or more second CORESETs in an active BWP in a serving cell may be interchangeably interpreted.

### (Radio Communication Method)

A PUCCH resource of UCI (for example, SR/HARQ-ACK/CSI) may be associated with a panel based on a specific method.

Such association may be configured for a UE by using higher layer signaling (for example, RRC signaling/MAC CE), the association may be indicated for the UE by using DCI, or the UE may be notified of the association by a combination of the RRC/MAC CE/DCI. Such information the UE is notified of may be referred to as configuration information, indication information, or the like.

A panel may be associated with a PUCCH resource, or may be associated with spatial relation information/TCI state of the PUCCH resource.

A PUSCH transmission may be associated with a panel based on a specific method.

Such association may be configured for a UE by using higher layer signaling (for example, RRC signaling/MAC CE), the association may be indicated for the UE by using DCI, or the UE may be notified of the association by a combination of the RRC/MAC CE/DCI. Such information the UE is notified of may be referred to as configuration information, indication information, or the like.

A panel may be associated with a PUSCH transmission (resource), may be associated with a TCI state/SRI/SRS resource of the PUSCH transmission, or may be associated with CSI (aperiodic (AP)/semi-persistent (SP) CSI) in the PUSCH.

UCI (for example, SR/HARQ-ACK/CSI report) may be associated with a panel based on a specific method.

Such association may be configured for a UE by using higher layer signaling (for example, RRC signaling/MAC CE), the association may be indicated for the UE by using DCI, or the UE may be notified of the association by a combination of the RRC/MAC CE/DCI.

A panel may be associated with a PUCCH resource for a CSI report/SR/HARQ-ACK, or may be associated with at least one of a CSI report configuration, an SR configuration, and a PDCCH/PDSCH corresponding to HARQ-ACK information. For CSI in a PUSCH, a panel may be associated with a PUSCH transmission of the CSI report.

Each embodiment/aspect/option/choice in the present disclosure may be applied to utilization of at least one of single DCI using multi-TRP and multi-DCI using multi-TRP.

Each embodiment/aspect/option/choice in the present disclosure may be inapplicable to a case where multi-DCI using multi-TRP is utilized.

Hereinafter, in each embodiment and each drawing in the present disclosure, a case is described that PUSCHs/PUCCHs overlap with each other in the time domain. Such overlap may mean that PUSCH/PUCCH resources completely overlap with each other, may mean that the PUSCH/PUCCH resources overlap at least partially with each other, or may mean that a time resource of a certain PUSCH/PUCCH resource is completely included in a time resource of another PUSCH/PUCCH resource. In the present disclosure, overlap in the time domain may be simply described as "overlap."

Hereinafter, in each embodiment in the present disclosure, although a case is described that the number of multiple panels is two, the number of panels may be three or more. In other words, "two" for the number of panels may be replaced with a number being three or more.

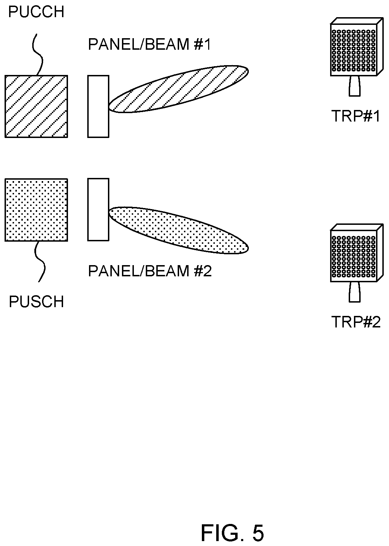

In the present disclosure, support/configuration/activation of simultaneous UL transmission of a PUSCH and a PUCCH using multiple panels may mean that a UE transmits the PUCCH using a certain panel/beam and transmits the PUSCH using another panel/beam (FIG. 5).

In the present disclosure, in a case where a specific timeline condition is satisfied, a UE may multiplex/map UCI in a PUCCH to a PUSCH. Such a specific timeline condition may be a timeline condition defined in an existing specification (Rel. 15/16/17) or may be a new timeline for a case of multiplexing/mapping UCI of a PUCCH to a PUSCH related to a different panel.

### <First Embodiment>

### (Analysis 1)

In Rel. 16/17, for multi-DCI using multi-TRP, in a case where an HARQ-ACK feedback mode is not configured as "separate" (for example, an RRC parameter "ackNackFeedbackMode = separate" is not configured), a UE does not expect/assume a PUSCH/PUCCH scheduled/triggered by DCI with a value of a CORESET pool index corresponding to "0" and a PUSCH/PUCCH scheduled/triggered by DCI with a value of a CORESET pool index corresponding to "1," overlapping in the time domain (which may be referred to as Restriction 1).

However, in a case where simultaneous transmission using multiple panels for a plurality of (for example, two) PUSCHs/PUCCHs is supported, whether such overlap is allowed is not clear.

Hereinafter, a first embodiment describes allowance/support of overlap between a PUSCH and a PUCCH.

Simultaneous transmission using multiple panels for a plurality of (for example, two) PUSCHs/PUCCHs may be supported/configured/activated. A UE may support simultaneous transmission using multiple panels for a plurality of (for example, two) PUSCHs/PUCCHs. Simultaneous transmission using multiple panels for a plurality of (for example, two) PUSCHs/PUCCHs may be configured/activated for the UE.

Such configuration/activation may be performed using higher layer signaling(RRC/MAC CE)/DCI.

Only if the configuration/activation is not performed for the UE, Restriction 1 described above may be applied.

A configuration related to multi-DCI using multi-TRP may be configured for a UE. A specific HARQ-ACK feedback mode may be configured for the UE (for example, an HARQ-ACK feedback mode may be configured as "separate" (for example, the RRC parameter "ackNackFeedbackMode = separate" may be notified)).

A UE may perform assumption/expectation/judgment related to PUSCH/PUCCH overlap based on whether PUSCH(s)/PUCCH(s) are associated with an identical panel or associated with different panels.

For example, when a certain PUSCH/PUCCH and another PUSCH/PUCCH are associated with an identical panel, a UE need not expect/assume that a PUSCH/PUCCH scheduled/triggered by DCI corresponding to a CORESET pool index of a first value (for example, "0") overlaps (in the time domain) with a PUSCH/PUCCH scheduled/triggered by DCI corresponding to a CORESET pool index of a second value (for example, "1").

For example, when a certain PUSCH/PUCCH and another PUSCH/PUCCH are associated with different panels, the UE may follow at least one of Option 1-1 to Option 1-3 below.

The UE need not expect/assume that the PUSCH/PUCCH scheduled/triggered by the DCI corresponding to the CORESET pool index of the first value (for example, "0") overlaps (in the time domain) with the PUSCH/PUCCH scheduled/triggered by the DCI corresponding to the CORESET pool index of the second value (for example, "1") (Option 1-1).

The UE may expect/assume that the PUSCH/PUCCH scheduled/triggered by the DCI corresponding to the CORESET pool index of the first value (for example, "0") overlaps (in the time domain) with the PUSCH/PUCCH scheduled/triggered by the DCI corresponding to the CORESET pool index of the second value (for example, "1") (Option 1-2). In this case, the UE may simultaneously transmit the PUSCH/PUCCH corresponding to the CORESET pool index of the first value and the PUSCH/PUCCH corresponding to the CORESET pool index of the second value (in a manner of overlapping in the time domain).

Which of Option 1-1 and Option 1-2 described above is to be applied may be configured for the UE by using higher layer signaling (RRC/MAC CE) (Option 1-3).

Note that embodiments of the present disclosure including the present embodiment may be applied not only to overlap between a PUSCH and PUCCH but also to overlap between a PUSCH and PUSCH and overlap between a PUCCH and PUCCH.

The first embodiment described above enables operation related to PUSCH/PUCCH overlap to be appropriately controlled even when simultaneous transmission using multiple panels is supported.

### <Second Embodiment>

### (Analysis 2)

In Rel. 16/17, when a PUSCH (PUSCH without UL-SCH) including no UL data (UL-SCH) overlaps (in the time domain) with a PUCCH including a positive SR, the PUSCH is dropped (which may be referred to as Restriction 2).

However, in a case where simultaneous transmission using multiple panels for a plurality of (for example, two) PUSCHs/PUCCHs is supported, UE operation with respect to overlap between the PUSCH including no UL data and the PUCCH including the positive SR is not clear.

Hereinafter, a second embodiment describes such overlap in simultaneous transmission using multiple panels.

Simultaneous transmission using multiple panels for a plurality of (for example, two) PUSCHs/PUCCHs may be supported/configured/activated. A UE may support simultaneous transmission using multiple panels for a plurality of (for example, two) PUSCHs/PUCCHs. Simultaneous transmission using multiple panels for a plurality of (for example, two) PUSCHs/PUCCHs may be configured/activated for the UE.

Such configuration/activation may be performed using higher layer signaling(RRC/MAC CE)/DCI.

Only if the configuration/activation is not performed for the UE, Restriction 2 described above may be applied.

A PUSCH (PUSCH without UL-SCH) including no UL data (UL-SCH) and a PUCCH including a positive SR may be configured overlapping with each other (in the time domain).

The UE may determine the PUSCH/PUCCH transmission based on whether such PUSCH/PUCCH described above are associated with an identical panel or associated with different panels.

For example, in a case where the PUSCH and the PUCCH are associated with an identical panel, the UE may drop transmission of the PUSCH.

For example, in a case where the PUSCH and the PUCCH are associated with different panels, the UE may follow at least one of Option 2-1 to Option 2-3 below.

The UE need not transmit the PUSCH (Option 2-1). The UE may determine not to transmit the PUSCH.

The UE may transmit the PUSCH using a certain panel and transmit the PUCCH using another panel (Option 2-2).

Which of Option 2-1 and Option 2-2 described above is to be applied may be configured for the UE by using higher layer signaling (RRC/MAC CE) (Option 2-3).

The second embodiment described above enables operation related to overlap between a PUSCH including no UL data and a PUCCH including a positive SR to be appropriately controlled even when simultaneous transmission using multiple panels is supported.

### <Third Embodiment>

### (Analysis 3)

In Rel. 16/17, when a PUCCH including UCI overlaps (in the time domain) with a PUSCH including AP/SP-CSI, a UE multiplexes/maps only an HARQ-ACK included in the UCI on the PUSCH and drops the PUCCH (which may be referred to as Restriction 3).

However, in a case where simultaneous transmission using multiple panels for a plurality of (for example, two) PUSCHs/PUCCHs is supported, UE operation with respect to overlap between the PUCCH including the UCI and the PUSCH including the AP/SP-CSI is not clear.

Hereinafter, a third embodiment describes such overlap in simultaneous transmission using multiple panels.

Simultaneous transmission using multiple panels for a plurality of (for example, two) PUSCHs/PUCCHs may be supported/configured/activated. A UE may support simultaneous transmission using multiple panels for a plurality of (for example, two) PUSCHs/PUCCHs. Simultaneous transmission using multiple panels for a plurality of (for example, two) PUSCHs/PUCCHs may be configured/activated for the UE.

Such configuration/activation may be performed using higher layer signaling(RRC/MAC CE)/DCI.

Only if the configuration/activation is not performed for the UE, Restriction 3 described above may be applied.

A PUSCH including CSI (for example, AP/SP-CSI) and a PUCCH including UCI (HARQ-ACK/SR/CSI) may be configured overlapping with each other (in the time domain).

The UE may determine the PUSCH/PUCCH (UCI) transmission based on whether such PUSCH/PUCCH described above are associated with an identical panel or associated with different panels.

For example, in a case where the PUSCH and the PUCCH are associated with an identical panel, the UE may multiplex/map (if UCI of the PUCCH includes an HARQ-ACK) the HARQ-ACK on the PUSCH and may not transmit the PUCCH (or may drop the PUCCH).

For example, in a case where the PUSCH and the PUCCH are associated with different panels, the UE may follow at least one of Option 3-1 to Option 3-4 below.

The UE may multiplex/map (if UCI of the PUCCH includes an HARQ-ACK) the HARQ-ACK on the PUSCH and may not transmit the PUCCH (Option 3-1).

The UE may multiplex/map (if UCI of the PUCCH includes an HARQ-ACK) the HARQ-ACK on the PUSCH and map the UCI except the HARQ-ACK on the PUCCH. The UE may transmit the PUSCH using a certain panel and transmit the PUCCH using another panel (Option 3-2).

The UE need not multiplex/map (even if UCI of the PUCCH includes an HARQ-ACK) the HARQ-ACK on the PUSCH. The UE may transmit the PUSCH using a certain panel and transmit the PUCCH using another panel (Option 3-3).

Which of Option 3-1 to Option 3-3 described above is to be applied may be configured for the UE by using higher layer signaling (RRC/MAC CE) (Option 3-4).

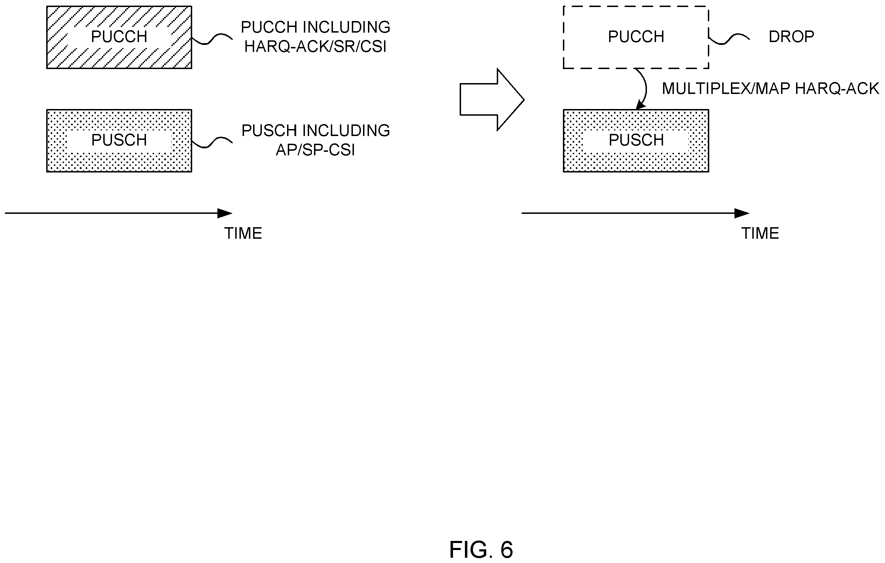

FIG. 6 is a diagram to show an example of a PUSCH/PUCCH transmission method according to Option 3-1. In the example shown in FIG. 6, a PUCCH including UCI (HARQ-ACK/SR/CSI) overlaps with a PUSCH including CSI (AP/SP-CSI).

In the example shown in FIG. 6, a UE multiplexes/maps/piggybacks, using a certain panel, the HARQ-ACK included in the UCI of the PUCCH, on the PUSCH, and transmits the PUSCH. The UE drops the PUCCH.

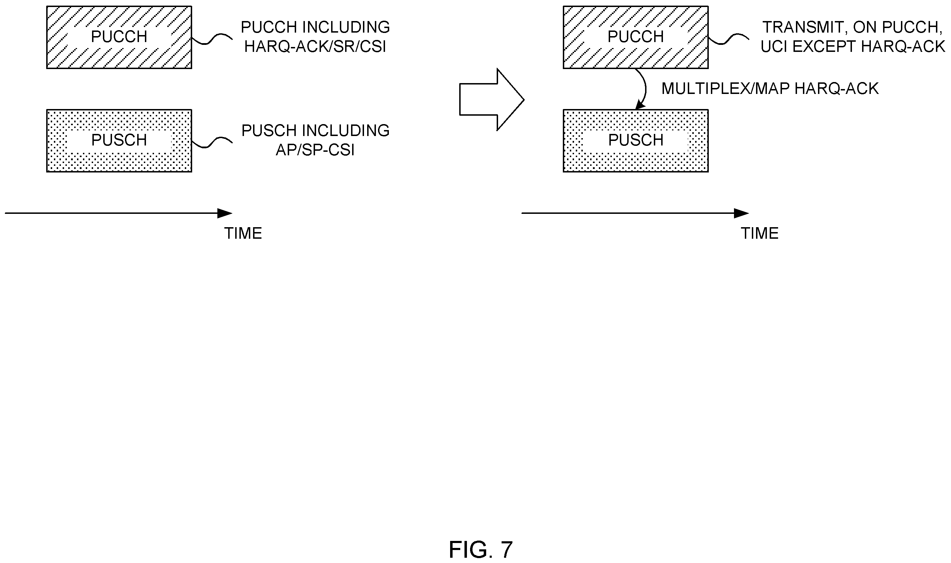

FIG. 7 is a diagram to show an example of a PUSCH/PUCCH transmission method according to Option 3-2. In the example shown in FIG. 7, a PUCCH including UCI (HARQ-ACK/SR/CSI) overlaps with a PUSCH including CSI (AP/SP-CSI).

In the example shown in FIG. 7, a UE multiplexes/maps/piggybacks, using a certain panel, the HARQ-ACK included in the UCI of the PUCCH, on the PUSCH, and transmits the PUSCH. The UE transmits, using another panel, the UCI other than the HARQ-ACK by using the PUCCH.

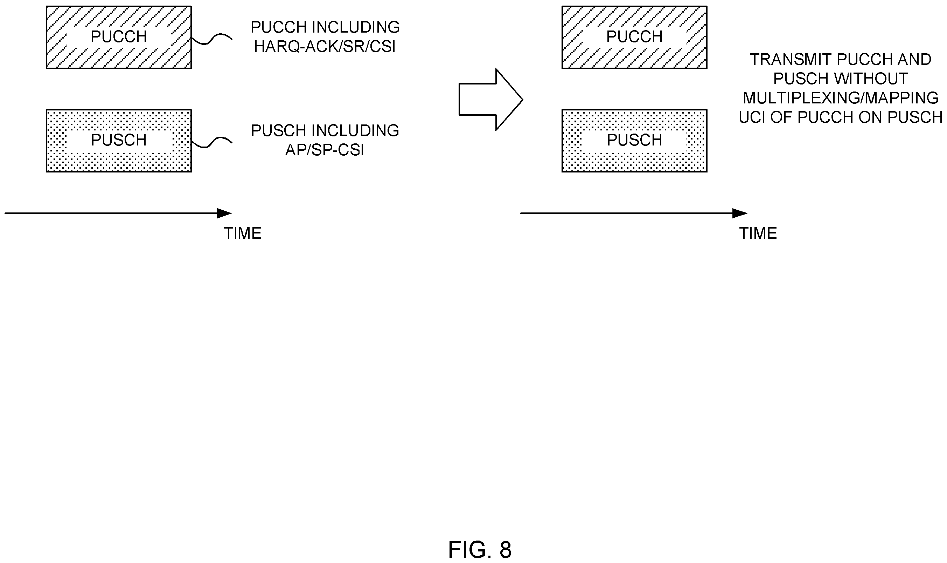

FIG. 8 is a diagram to show an example of a PUSCH/PUCCH transmission method according to Option 3-3. In the example shown in FIG. 8, a PUCCH including UCI (HARQ-ACK/SR/CSI) overlaps with a PUSCH including CSI (AP/SP-CSI).

In the example shown in FIG. 8, a UE transmits, using a certain panel, the PUSCH without multiplexing/mapping/piggybacking the HARQ-ACK included in the UCI of the PUCCH, on the PUSCH. The UE transmits, using another panel, the UCI including the HARQ-ACK by using the PUCCH.

Note that, in the present embodiment, when a PUSCH and a PUCCH are associated with an identical panel, the UE may determine to perform the PUSCH/PUCCH transmission in accordance with existing operation (defined in Rel. 15/16/17 or earlier versions). When the PUSCH and the PUCCH are associated with different panels, the UE may determine to transmit the PUSCH with a certain panel and transmit the PUCCH with another panel.

The third embodiment described above enables operation related to overlap between a PUCCH including UCI (HARQ-ACK/SR/CSI) and a PUSCH including CSI (AP/SP-CSI) to be appropriately controlled even when simultaneous transmission using multiple panels is supported.

### <Fourth Embodiment>

### (Analysis 4)

In Rel. 16/17, when a PUCCH including UCI overlaps (in the time domain) with a PUSCH (PUSCH without AP/SP CSI) including no AP/SP-CSI, a UE multiplexes/maps only an HARQ-ACK and CSI included in the UCI on the PUSCH and drops the PUCCH (which may be referred to as Restriction 4).

However, in a case where simultaneous transmission using multiple panels for a plurality of (for example, two) PUSCHs/PUCCHs is supported, UE operation with respect to overlap between a PUCCH including the UCI and a PUSCH including no AP/SP-CSI is not clear.

Hereinafter, a fourth embodiment describes such overlap in simultaneous transmission using multiple panels.

Simultaneous transmission using multiple panels for a plurality of (for example, two) PUSCHs/PUCCHs may be supported/configured/activated. A UE may support simultaneous transmission using multiple panels for a plurality of (for example, two) PUSCHs/PUCCHs. Simultaneous transmission using multiple panels for a plurality of (for example, two) PUSCHs/PUCCHs may be configured/activated for the UE.

Such configuration/activation may be performed using higher layer signaling(RRC/MAC CE)/DCI.

Only if the configuration/activation is not performed for the UE, Restriction 4 described above may be applied.

A PUSCH including no CSI (for example, AP/SP-CSI) and a PUCCH including UCI (HARQ-ACK/SR/CSI) may be configured overlapping with each other (in the time domain).

The UE may determine the PUSCH/PUCCH (UCI) transmission based on whether such PUSCH/PUCCH described above are associated with an identical panel or associated with different panels.

For example, in a case where the PUSCH and the PUCCH are associated with an identical panel, the UE may multiplex/map (if UCI of the PUCCH includes an HARQ-ACK/CSI) at least one of the HARQ-ACK and the CSI on the PUSCH and may not transmit the PUCCH (or may drop the PUCCH).

For example, in a case where the PUSCH and the PUCCH are associated with different panels, the UE may follow at least one of Option 4-1 to Option 4-6 below.

The UE may multiplex/map (if UCI of the PUCCH includes an HARQ-ACK/CSI) the HARQ-ACK/CSI on the PUSCH and may not transmit the PUCCH (Option 4-1).

The UE may multiplex/map (if UCI of the PUCCH includes an HARQ-ACK/CSI) the HARQ-ACK/CSI on the PUSCH, and map the UCI except the HARQ-ACK/CSI, on the PUCCH. The UE may transmit the PUSCH using a certain panel and transmit the PUCCH using another panel (Option 4-2).

The UE may multiplex/map (if UCI of the PUCCH includes an HARQ-ACK) the HARQ-ACK on the PUSCH and map the UCI except the HARQ-ACK on the PUCCH. The UE may transmit the PUSCH using a certain panel and transmit the PUCCH using another panel (Option 4-3).

The UE may multiplex/map (if UCI of the PUCCH includes CSI) the CSI on the PUSCH, and map the UCI except the CSI, on the PUCCH. The UE may transmit the PUSCH using a certain panel and transmit the PUCCH using another panel (Option 4-4).

The UE need not multiplex/map (even if UCI of the PUCCH includes an HARQ-ACK/CSI) the HARQ-ACK/CSI on the PUSCH. The UE may transmit the PUSCH using a certain panel and transmit the PUCCH using another panel (Option 4-5).

Which of Option 4-1 to Option 4-5 described above is to be applied may be configured for the UE by using higher layer signaling (RRC/MAC CE) (Option 4-6).

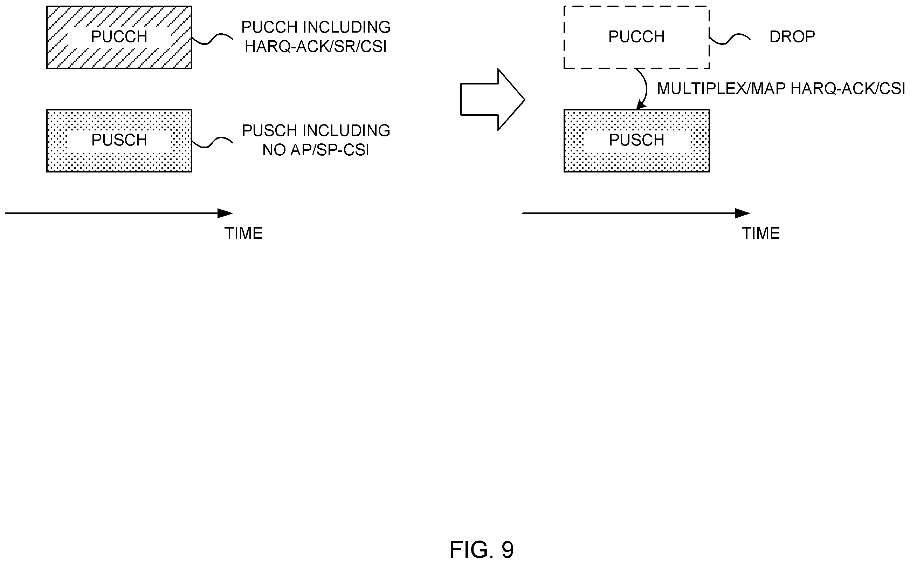

FIG. 9 is a diagram to show an example of a PUSCH/PUCCH transmission method according to Option 4-1. In the example shown in FIG. 9, a PUCCH including UCI (HARQ-ACK/SR/CSI) overlaps with a PUSCH including no CSI (AP/SP-CSI).

In the example shown in FIG. 9, a UE multiplexes/maps/piggybacks, using a certain panel, the HARQ-ACK and the CSI included in the UCI of the PUCCH, on the PUSCH, and transmits the PUSCH. The UE drops the PUCCH.

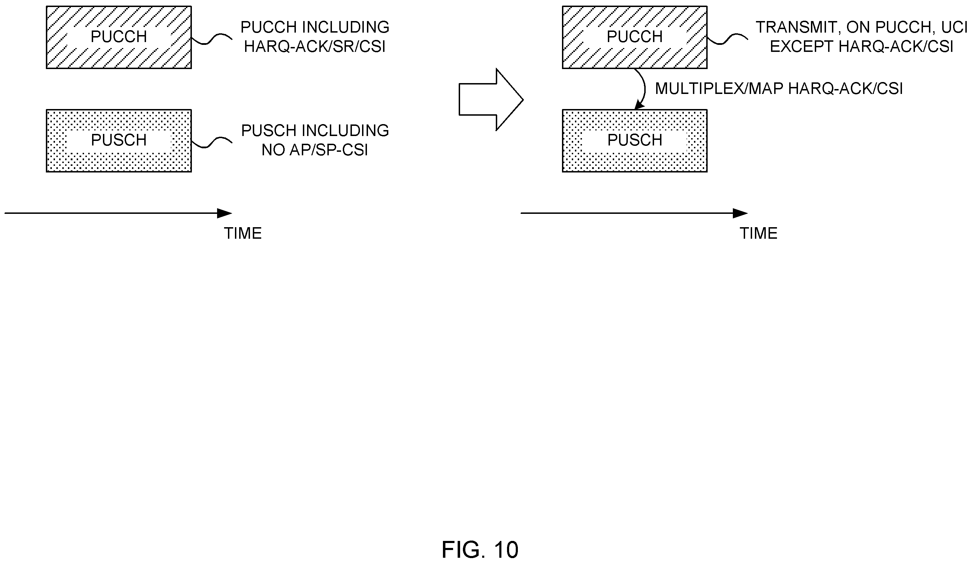

FIG. 10 is a diagram to show an example of a PUSCH/PUCCH transmission method according to Option 4-2/4-3/4-4. In the example shown in FIG. 10, a PUCCH including UCI (HARQ-ACK/SR/CSI) overlaps with a PUSCH including no CSI (AP/SP-CSI).

In the example shown in FIG. 10, a UE multiplexes/maps/piggybacks, using a certain panel, at least one of the HARQ-ACK and the CSI included in the UCI of the PUCCH, on the PUSCH, and transmits the PUSCH. The UE transmits, using another panel, the UCI other than the at least one of the HARQ-ACK and the CSI by using the PUCCH.

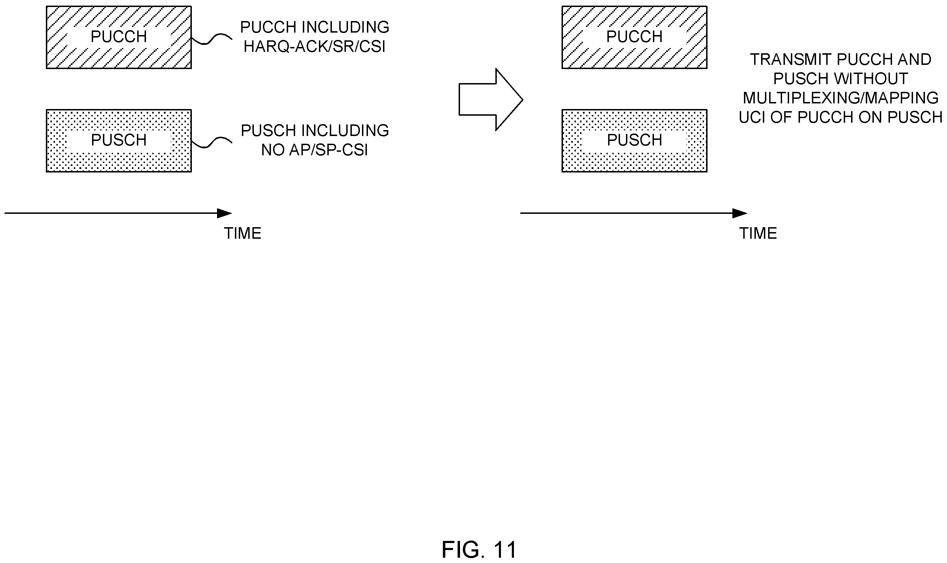

FIG. 11 is a diagram to show an example of a PUSCH/PUCCH transmission method according to Option 4-5. In the example shown in FIG. 11, a PUCCH including UCI (HARQ-ACK/SR/CSI) overlaps with a PUSCH including no CSI (AP/SP-CSI).

In the example shown in FIG. 11, a UE transmits, using a certain panel, the PUSCH without multiplexing/mapping/piggybacking the HARQ-ACK/CSI included in the UCI of the PUCCH on the PUSCH. The UE transmits, using another panel, the UCI including the HARQ-ACK/CSI by using the PUCCH.

Note that, in the present embodiment, when a PUSCH and a PUCCH are associated with an identical panel, the UE may determine to perform the PUSCH/PUCCH transmission in accordance with existing operation (defined in Rel. 15/16/17 or earlier versions). When the PUSCH and the PUCCH are associated with different panels, the UE may determine to transmit the PUSCH with a certain panel and transmit the PUCCH with another panel.

The fourth embodiment described above enables operation related to overlap between a PUCCH including UCI (HARQ-ACK/SR/CSI) and a PUSCH including no CSI (AP/SP-CSI) to be appropriately controlled even when simultaneous transmission using multiple panels is supported.

### <Fifth Embodiment>

### (Analysis 5)

In Rel. 16/17, regarding overlap between two pieces of CSI in the time domain, in a case where the two pieces of CSI have respective values (for example, y) related to different priorities (except a case that y for one piece of CSI is 2 and y for the other one piece of CSI is 3), a CSI report with a lower priority is dropped (which may be referred to as Restriction 5).

y may be a value based on at least one of a CSI report type (A-CSI report, SP-CSI report, or P-CSI report) and a channel for the CSI report to be transmitted on.

For example, y for a PUSCH of AP-CSI may be a first value (for example, 0), y for a PUSCH of SP-CSI may be a second value (for example, 1), y for a PUCCH of SP-CSI may be a third value (for example, 2), and y for a PUCCH of P-CSI may be a fourth value (for example, 3).

Restriction 5 described above may be applied to at least one of overlap between CSI in a PUSCH and CSI in a PUCCH and overlap between CSI in a PUSCH and CSI in a PUSCH.

However, in a case where simultaneous transmission using multiple panels for a plurality of (for example, two) PUSCHs/PUCCHs is supported, UE operation with respect to overlap between a plurality of (for example, two) pieces of CSI is not clear.

Hereinafter, a fifth embodiment describes such overlap in simultaneous transmission using multiple panels.

Simultaneous transmission using multiple panels for a plurality of (for example, two) PUSCHs/PUCCHs may be supported/configured/activated. A UE may support simultaneous transmission using multiple panels for a plurality of (for example, two) PUSCHs/PUCCHs. Simultaneous transmission using multiple panels for a plurality of (for example, two) PUSCHs/PUCCHs may be configured/activated for the UE.

Such configuration/activation may be performed using higher layer signaling(RRC/MAC CE)/DCI.

Only if the configuration/activation is not performed for the UE, Restriction 4 described above may be applied.

A plurality of (for example, two) CSI reports may be configured overlapping with each other (in the time domain). The plurality of CSI reports may have respective values (for example, y in a function (for example, Pr_{iiCSI}(y, k, c, s)) that provides the priority value) related to different priorities.

The present embodiment may be applied to cases except a case that a first CSI report overlaps with a second CSI report, that the first CSI report corresponds to y of a specific first value (for example, 2), and that the second CSI report corresponds to y of a specific second value (for example, 3).

Such y may be a value based on at least one of a CSI report type (A-CSI report, SP-CSI report, or P-CSI report) and a channel for the CSI report to be transmitted on.

For example, y for a PUSCH of AP-CSI may be a first value (for example, 0), y for a PUSCH of SP-CSI may be a second value (for example, 1), y for a PUCCH of SP-CSI may be a third value (for example, 2), and y for a PUCCH of P-CSI may be a fourth value (for example, 3).

The UE may determine transmission of the plurality of CSI based on whether the plurality of CSI are associated with an identical panel or associated with different panels.

For example, in a case where the plurality of CSI are associated with an identical panel, the UE need not transmit a CSI report with a low priority.

The priority may be determined based on a function (for example, Pr_{iiCSI}(y, k, c, s)) that provides the priority value. A higher priority may correspond to a lower (or higher) value of Pr_{iiCSI}(y, k, c, s).

For example, in a case where the plurality of CSI are associated with different panels, the UE may follow at least one of Option 5-1 to Option 5-3 below.

The UE need not transmit a CSI report with a low priority (Option 5-1).

The UE may transmit a certain CSI report using a certain panel and transmit another CSI report using another panel (Option 5-2).

Which of Option 5-1 and Option 5-2 described above is to be applied may be configured for the UE by using higher layer signaling (RRC/MAC CE) (Option 5-3).

The fifth embodiment described above enables operation related to overlap between a plurality of CSI corresponding to different priorities to be appropriately controlled even when simultaneous transmission using multiple panels is supported.

### <Sixth Embodiment>

### (Analysis 6)

In Rel. 16/17, in a case that a PUCCH (including UCI) and a plurality of PUSCHs overlap with each other, and that some of the plurality of PUSCHs are scheduled by DCI while some other PUSCHs of the plurality of PUSCHs are configured grant (CG) PUSCHs, a UE multiplexes/maps the UCI on a PUSCH scheduled by the DCI (Restriction 6-A).

In Rel. 16/17, in a case that a PUCCH (including UCI) and a plurality of PUSCHs overlap with each other and that AP-CSI is multiplexed/mapped on none of the plurality of PUSCHs, the UE multiplexes/maps the UCI on a PUSCH of a serving cell with the minimum serving cell index (ServCellIndex). In this case, when there are a plurality of PUSCHs of the serving cell with the minimum serving cell index, the UE multiplexes/maps the UCI on a PUSCH earliest in time (Restriction 6-B).

In Rel. 16/17, the UE does not assume/expect that one or more PUSCHs including AP-CSI overlap with a PUCCH (Restriction 6-C).

However, in a case where simultaneous transmission using multiple panels for a plurality of (for example, two) PUSCHs/PUCCHs is supported, UE operation related to PUSCH selection/determination as described above is not clear.

Hereinafter, a sixth embodiment describes such PUSCH selection/determination as described above in simultaneous transmission using multiple panels.

Simultaneous transmission using multiple panels for a plurality of (for example, two) PUSCHs/PUCCHs may be supported/configured/activated. A UE may support simultaneous transmission using multiple panels for a plurality of (for example, two) PUSCHs/PUCCHs. Simultaneous transmission using multiple panels for a plurality of (for example, two) PUSCHs/PUCCHs may be configured/activated for the UE.

Such configuration/activation may be performed using higher layer signaling(RRC/MAC CE)/DCI.

Only if the configuration/activation is not performed for the UE, Restriction 6-A/6-B/6-C described above may be applied.

A PUCCH and a plurality of PUSCHs may be configured overlapping with each other (in the time domain). The plurality of PUSCHs may be PUSCHs that meet a condition for multiplexing/mapping of UCI.

The UE may determine the PUSCH/PUCCH (UCI) transmission based on whether the PUCCH/the plurality of PUSCHs are associated with an identical panel or associated with different panels.

For example, in a case where the PUCCH (including UCI) and the plurality of PUSCHs are associated with an identical panel, the UE may select/determine a specific PUSCH from among the plurality of PUSCHs based on a specific rule. The specific rule may lead to a PUSCH in a restriction defined in Rel. 16/17 described above. The UE may multiplex/map the UCI on the selected/determined PUSCH.

For example, in a case that the plurality of PUSCHs are associated with an identical panel and the PUCCH (including UCI) is associated with a panel different from that of the plurality of PUSCHs, the UE may select/determine a specific PUSCH from among the plurality of PUSCHs based on a specific rule. The specific rule may lead to a PUSCH in a restriction defined in Rel. 16/17 described above. The UE may multiplex/map the UCI on the selected/determined PUSCH.

For example, in a case where the plurality of PUSCHs are associated with different panels, the UE may select/determine a specific PUSCH from among the plurality of PUSCHs based on a specific rule. The UE may multiplex/map the UCI on the selected/determined PUSCH.

The specific rule may be at least one of Option 6-1 to Option 6-5 below.

### (Option 6-1)

First, the UE may perform, for the plurality of PUSCHs, selection/determination (first selection/determination) based on an ID related to a panel.

For example, the UE may select/determine a PUSCH corresponding to an ID (panel ID) related to a specific panel or a PUSCH associated with a panel identical to that for a PUCCH corresponding to a specific priority.

The ID related to the specific panel may be a lower (or higher) panel ID.

The PUCCH corresponding to the specific priority may be a PUCCH corresponding to a higher (or lower) priority.

In the present disclosure, "higher," "greater," "lower," "smaller," "highest," "greatest," "lowest," and "smallest" may be interchangeably interpreted.

For the PUSCH based on the first selection/determination, in a case where there are a plurality of PUSCHs (in other words, in a case where there are the PUSCHs associated with an identical panel), the UE may apply, to the PUSCHs, the rule in Rel. 16/17 described above (for example, the UE may firstly perform selection/determination based on PUSCH types, secondly perform selection/determination based on serving cell indices, and thirdly perform selection/determination related to time resources for the PUSCHs).

### (Option 6-2)

First, the UE may perform, for the plurality of PUSCHs, selection/determination (first selection/determination) based on a PUSCH type.

For example, a priority based on whether the plurality of PUSCHs are PUSCHs scheduled by DCI or configured grant PUSCHs may be applied to the plurality of PUSCHs. For example, a priority for a PUSCH scheduled by DCI may be defined higher (or lower) than a priority for a configured grant PUSCH. The UE may perform PUSCH selection/determination based on such a priority.

Next, in a case where there are a plurality of PUSCHs based on the first selection/determination, the UE may perform, for the PUSCHs based on the first selection/determination, selection/determination (second selection/determination) based on an ID related to a panel.

For example, in the case where there are a plurality of PUSCHs based on the first selection/determination, the UE may select/determine, from among the selected/determined PUSCHs, a PUSCH corresponding to an ID (panel ID) related to a specific panel or a PUSCH associated with a panel identical to that for a PUCCH corresponding to a specific priority.

The ID related to the specific panel may be a lower (or higher) panel ID.

The PUCCH corresponding to the specific priority may be a PUCCH corresponding to a higher (or lower) priority.

Furthermore, in a case where there are a plurality of PUSCHs based on the second selection/determination (in other words, in a case where there are PUSCHs associated with identical panel), the UE may perform selection/determination (third selection/determination) based on a serving cell index (ServCellIndex) corresponding to a PUSCH.

For example, in the case where there are a plurality of PUSCHs based on the second selection/determination, the UE may select/determine, from among the selected/determined PUSCHs, a PUSCH corresponding to a specific serving cell index (ServCellIndex). For example, a priority for a PUSCH with a smaller serving cell index (ServCellIndex) may be defined higher (or lower) than that for a PUSCH with a greater serving cell index (ServCellIndex). The UE may perform PUSCH selection/determination based on such a priority.

Furthermore, in a case where there are a plurality of PUSCHs based on the third selection/determination, the UE may select/determine, from among the plurality of PUSCHs, a PUSCH earliest (or latest) in time (fourth selection/determination). For example, a priority for a PUSCH earlier in time may be defined higher (or lower) than a priority for a PUSCH later in time.

### (Option 6-3)

First, the UE may perform, for the plurality of PUSCHs, selection/determination (first selection/determination) based on a PUSCH type.

For example, a priority based on whether the plurality of PUSCHs are PUSCHs scheduled by DCI or configured grant PUSCHs may be applied to the plurality of PUSCHs. For example, a priority for a PUSCH scheduled by DCI may be defined higher (or lower) than a priority for a configured grant PUSCH. The UE may perform PUSCH selection/determination based on such a priority.

Next, in a case where there are a plurality of PUSCHs based on the first selection/determination, the UE may perform selection/determination (second selection/determination) based on a serving cell index (ServCellIndex) corresponding to a PUSCH.

For example, in the case where there are a plurality of PUSCHs based on the first selection/determination, the UE may select/determine, from among the selected/determined PUSCHs, a PUSCH corresponding to a specific serving cell index (ServCellIndex). For example, a priority for a PUSCH with a smaller serving cell index (ServCellIndex) may be defined higher (or lower) than that for a PUSCH with a greater serving cell index (ServCellIndex). The UE may perform PUSCH selection/determination based on such a priority.

Furthermore, in a case where there are a plurality of PUSCHs based on the second selection/determination (in other words, in a case where there are a plurality of PUSCHs corresponding to the same serving cell index), the UE may perform, for the PUSCHs based on the second selection/determination, selection/determination (third selection/determination) based on an ID related to a panel.

For example, in the case where there are a plurality of PUSCHs based on the second selection/determination, the UE may select/determine, from among the PUSCHs such selected/determined, a PUSCH corresponding to an ID (panel ID) related to a specific panel or a PUSCH associated with a panel identical to that for a PUCCH corresponding to a specific priority.

The ID related to the specific panel may be a lower (or higher) panel ID.

The PUCCH corresponding to the specific priority may be a PUCCH corresponding to a higher (or lower) priority.

Furthermore, in a case where there are a plurality of PUSCHs based on the third selection/determination, the UE may select/determine, from among the plurality of PUSCHs, a PUSCH earliest (or latest) in time (fourth selection/determination). For example, a priority for a PUSCH earlier in time may be defined higher (or lower) than a priority for a PUSCH later in time.

### (Option 6-4)

First, the UE may perform, for the plurality of PUSCHs, selection/determination (first selection/determination) based on a PUSCH type.

For example, a priority based on whether the plurality of PUSCHs are PUSCHs scheduled by DCI or configured grant PUSCHs may be applied to the plurality of PUSCHs. For example, a priority for a PUSCH scheduled by DCI may be defined higher (or lower) than a priority for a configured grant PUSCH. The UE may perform PUSCH selection/determination based on such a priority.

Next, in a case where there are a plurality of PUSCHs based on the first selection/determination, the UE may perform selection/determination (second selection/determination) based on a serving cell index (ServCellIndex) corresponding to a PUSCH.

For example, in the case where there are a plurality of PUSCHs based on the first selection/determination, the UE may select/determine, from among the PUSCHs such selected/determined, a PUSCH corresponding to a specific serving cell index (ServCellIndex). For example, a priority for a PUSCH with a smaller serving cell index (ServCellIndex) may be defined higher (or lower) than that for a PUSCH with a greater serving cell index (ServCellIndex). The UE may perform PUSCH selection/determination based on such a priority.

Furthermore, in a case where there are a plurality of PUSCHs based on the second selection/determination, the UE may select/determine, from among the plurality of PUSCHs, a PUSCH earliest (or latest) in time (third selection/determination). For example, a priority for a PUSCH earlier in time may be defined higher (or lower) than a priority for a PUSCH later in time.

Furthermore, in a case where there are a plurality of PUSCHs based on the third selection/determination (in other words, in a case where there are PUSCHs overlapping with each other in the same time domain after the first to third selections/determinations), the UE may perform, for the PUSCHs based on the third selection/determination, selection/determination (fourth selection/determination) based on an ID related to a panel.

For example, in a case where there are a plurality of PUSCHs based on the third selection/determination, the UE may select/determine, from among the selected/determined PUSCHs, a PUSCH corresponding to an ID (panel ID) related to a specific panel or a PUSCH associated with a panel identical to that for a PUCCH corresponding to a specific priority.

The ID related to the specific panel may be a lower (or higher) panel ID.

The PUCCH corresponding to the specific priority may be a PUCCH corresponding to a higher (or lower) priority.

### (Option 6-5)

The UE may apply, to PUSCHs corresponding to respective panels, the rule in Rel. 16/17 described above (for example, the UE may firstly perform selection/determination based on a PUSCH type, secondly perform selection/determination based on a serving cell index, and thirdly perform selection/determination related to a time resource for the PUSCHs) for PUSCH selection/determination.

The UE may multiplex/map, using multiple panels, UCI on the plurality of PUSCHs.

According to the sixth embodiment described above, selection/determination of a PUSCH on which UCI is to be multiplexed/mapped, from among a plurality of PUSCHs, can be appropriately performed even when UL simultaneous transmission using multiple panels is performed.

### <Variations>

Regarding a method of configuring Option 1-3/2-3/3-4/4-6/5-3 described above, the respective options may be configured based on different (independent) pieces of configuration information (signaling).

Regarding a method of configuring Option 1-3/2-3/3-4/4-6/5-3 described above, at least two (or all) of the options may be configured based on common (joint) configuration information (signaling).

In each embodiment of the present disclosure, "associated with different panels" and "associated with an identical panel" may be interchangeably interpreted.

### <Other Embodiments>

A higher layer parameter (RRC IE)/UE capability corresponding to a function (characteristic, feature) in at least one of the plurality of embodiments described above may be defined. The UE capability may indicate support for this function.

A UE configured with a higher layer parameter corresponding to the function (activating the function) may perform the function. A "UE configured with no higher layer parameter corresponding to the function does not perform the function (for example, the UE conforms to Rel. 15/16/17)" may be defined.

A UE having reported the UE capability indicating support for the function may perform the function. A "UE not having reported the UE capability indicating support for the function does not perform the function (for example, the UE conforms to Rel. 15/16/17)" may be defined.

In a case that a UE reports the UE capability indicating support for the function and is configured with a higher layer parameter corresponding to the function, the UE may perform the function. "In a case that a UE does not report the UE capability indicating support for the function or is not configured with the higher layer parameter corresponding to the function, the UE does not perform the function (for example, the UE conforms to Rel. 15/16/17)" may be defined.

The UE capability may indicate whether the UE supports this function.

The function may be application of UL simultaneous transmission using multiple panels.

The UE capability may be defined based on whether to support simultaneous transmission of a PUCCH with a certain panel and a PUSCH with another panel.

The UE capability may be defined based on whether to support multiplexing/mapping of UCI on a PUSCH associated with a panel identical to that for a PUCCH, in a case where the PUCCH including the UCI overlaps with the PUSCH.

The UE capability may be defined based on whether to support multiplexing/mapping of UCI on a PUSCH associated with a panel different from that for a PUCCH, in a case where the PUCCH including the UCI overlaps with the PUSCH.

The UE capability may be defined based on whether to support multiplexing/mapping of an HARQ-ACK on a PUSCH associated with a panel identical to that for a PUCCH, in a case where the PUCCH including UCI overlaps with the PUSCH including CSI (AP/SP-CSI).

The UE capability may be defined based on whether to support multiplexing/mapping of an HARQ-ACK on a PUSCH associated with a panel different from that for a PUCCH, in a case where the PUCCH including UCI overlaps with the PUSCH including CSI (AP/SP-CSI).

The UE capability may be defined based on whether to support multiplexing/mapping of an HARQ-ACK/CSI on a PUSCH associated with a panel identical to that for a PUCCH, in a case where the PUCCH including UCI overlaps with the PUSCH including no CSI (AP/SP-CSI).

The UE capability may be defined based on whether to support multiplexing/mapping of an HARQ-ACK/CSI on a PUSCH associated with a panel different from that for a PUCCH, in a case where the PUCCH including UCI overlaps with the PUSCH including no CSI (AP/SP-CSI).

The UE capability may be defined based on whether to support simultaneous transmission of a plurality of (two) CSI, in a case where the plurality of (two) CSI overlap with each other and are associated with different panels.

The UE capability may be defined based on whether to support at least one method of those described in the first to sixth embodiments.

Other embodiments described above enables a UE to achieve the function described above while maintaining compatibility with an existing specification.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

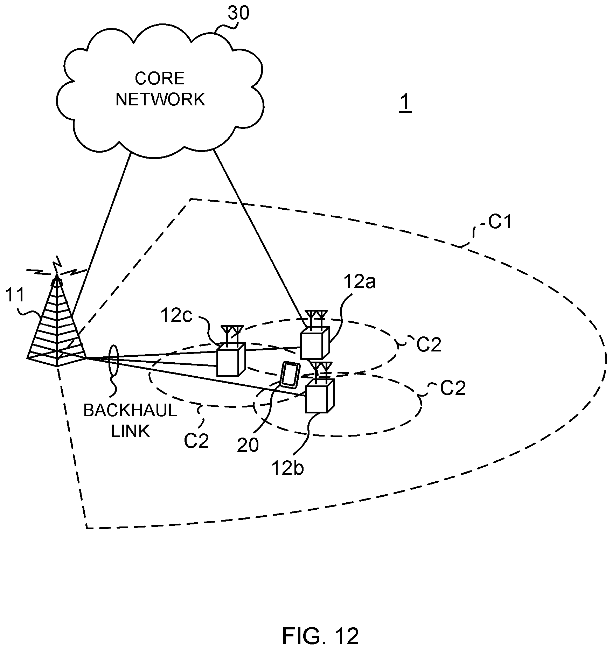

FIG. 12 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and the like.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in UL and DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information, and the like may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," or the like, and DCI for scheduling the PUSCH may be referred to as "UL grant," "UL DCI," or the like. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space based on a search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for the PBCH) may be referred to as an SS/PBCH block, an SS Block (SSB), or the like. Note that an SS, an SSB, and so on may be referred to as a "reference signal."

In the radio communication system 1, a reference signal for measurement (Sounding Reference Signal (SRS)), a demodulation reference signal (DMRS), and so on may be communicated as an uplink reference signal (UL-RS). Note that DMRS may be referred to as a "user terminal specific reference signal (UE-specific Reference Signal)."

### (Base Station)

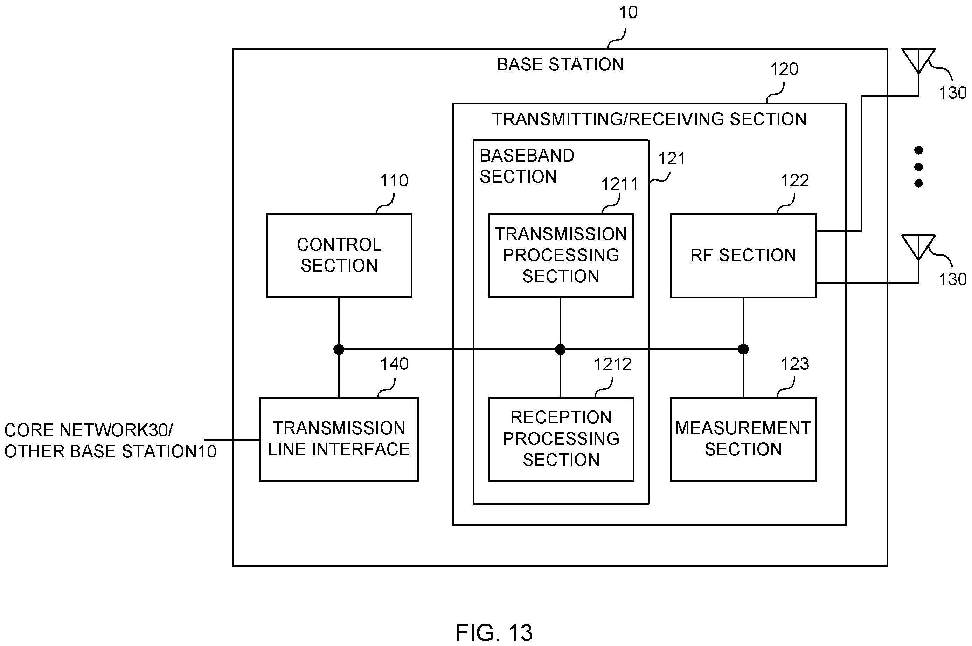

FIG. 13 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211 and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate a bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and the like, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and the like, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit first configuration information related to a plurality of channel state information (CSI) and second configuration information related to simultaneous transmission of physical uplink control channels (PUCCHs) using multiple panels. The control section 110 may indicate, using the first configuration information and the second configuration information, a PUCCH resource for the plurality of CSI in the same time domain to be mapped to (second embodiment).

The transmitting/receiving section 120 may transmit first configuration information related to a physical uplink control channel (PUCCH), second configuration information related to a physical uplink shared channel (PUSCH), and third configuration information related to uplink simultaneous transmission using multiple panels. The control section 110 may perform indication related to simultaneous transmission of the PUSCH and the PUCCH in the same time domain, by using the first configuration information, the second configuration information, and the third configuration information (first, second, third, and fifth embodiments).

The transmitting/receiving section 120 may transmit first configuration information related to a physical uplink control channel (PUCCH), second configuration information related to a physical uplink shared channel (PUSCH), and third configuration information related to uplink simultaneous transmission using multiple panels. The control section 110 may indicate selection related to a resource for the PUSCH and transmission of at least one of the PUSCH and the PUCCH, by using the first configuration information, the second configuration information, and the third configuration information (fourth and sixth embodiments).

### (User Terminal)

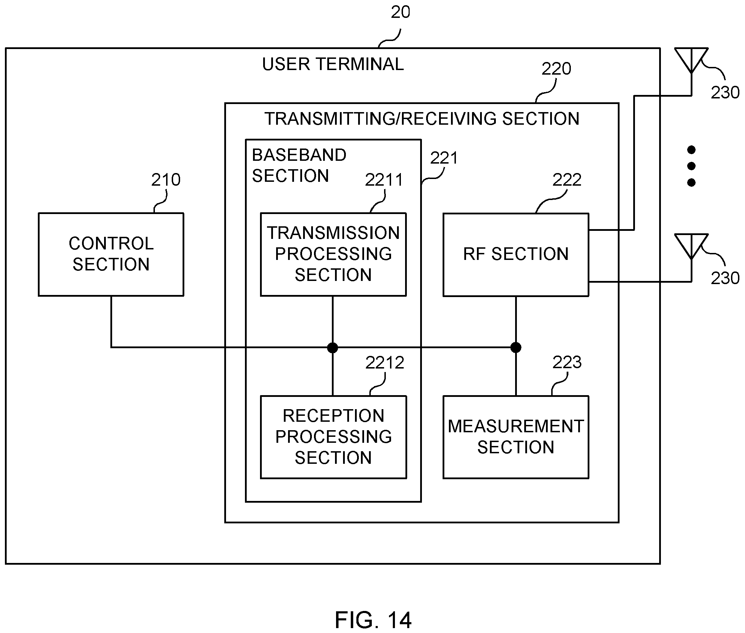

FIG. 14 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211 and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), or the like, for example, on data, control information, and the like acquired from the control section 210, and may generate a bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that whether to apply DFT processing may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, or the like, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, or the like, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, or the like, based on the received signal. The measurement section 223 may measure a received power (for example, RSRP), a received quality (for example, RSRQ, SINR, SNR), a signal strength (for example, RSSI), channel information (for example, CSI), or the like. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may perform first configuration information related to a physical uplink control channel (PUCCH), second configuration information related to a physical uplink shared channel (PUSCH), and third configuration information related to uplink simultaneous transmission using multiple panels. The control section 210 may control, based on the first configuration information, the second configuration information, and the third configuration information, assumption related to transmission of the PUSCH and the PUCCH in the same time domain and transmission of at least one of the PUSCH and the PUCCH (first, second, third, and fifth embodiments).

In a case that a PUCCH including a positive scheduling request (SR) is configured using the first configuration information and that a PUSCH including no uplink data is configured using the second configuration information, the control section 210 may control transmission of at least one of the PUSCH and the PUCCH based on whether the PUSCH and the PUCCH are associated with an identical panel (second embodiment).

In a case that a PUCCH including at least one of a hybrid automatic repeat request acknowledgement (HARQ-ACK), a scheduling request, and first channel state information (CSI) is configured using the first configuration information and that a PUSCH including second CSI is configured using the second configuration information, the control section 210 may control transmission of at least one of the PUSCH and the PUCCH based on whether the PUSCH and the PUCCH are associated with an identical panel (third embodiment).

In a case that a plurality of channel state information (CSI) is configured in the same time domain, the control section 210 may control transmission of at least one of the PUSCH and the PUCCH based on values related to priorities for the plurality of CSI and of whether the PUSCH and the PUCCH are associated with an identical panel (fifth embodiment).

The transmitting/receiving section 220 may receive first configuration information related to a physical uplink control channel (PUCCH), second configuration information related to a physical uplink shared channel (PUSCH), and third configuration information related to uplink simultaneous transmission using multiple panels. The control section 210 may control selection related to a resource for the PUSCH and transmission of at least one of the PUSCH and the PUCCH, based on the first configuration information, the second configuration information, and the third configuration information (fourth and sixth embodiments).

In a case that a PUCCH including at least one of a hybrid automatic repeat request acknowledgement (HARQ-ACK), a scheduling request, and first CSI is configured using the first configuration information and that a PUSCH including no CSI is configured using the second configuration information, the control section 210 may control transmission of at least one of the PUSCH and the PUCCH based on whether the PUSCH and the PUCCH are associated with an identical panel (fourth embodiment).

In a case that the PUSCH and the PUCCH are associated with different panels, the control section 210 may determine whether to map the HARQ-ACK and the first CSI on the PUSCH (fourth embodiment).

In a case that the PUSCH is a plurality of PUSCHs, the control section 210 may determine a PUSCH for the uplink control information to be mapped to from among the plurality of PUSCHs, based on IDs related to respective panels associated with the plurality of PUSCHs, respective types of the plurality of PUSCHs, respective serving cell indices associated with the plurality of PUSCHs, and respective time resources for the plurality of PUSCHs (sixth embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

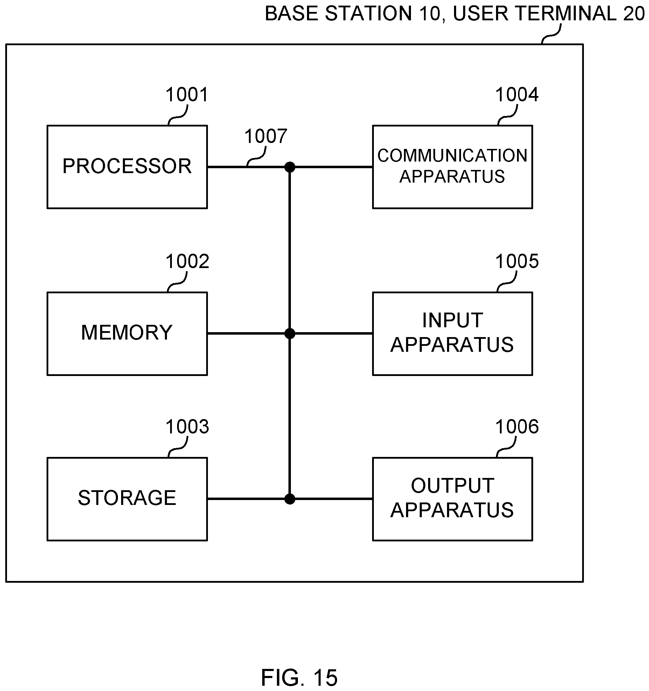

For example, a base station, a user terminal, and so on according to one embodiment of the present disclosure may function as a computer that executes the processes of the radio communication method of the present disclosure. FIG. 15 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," or the like instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, codewords, or the like, or may be the unit of processing in scheduling, link adaptation, or the like. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

A BWP may include a UL BWP (BWP for UL) and a DL BWP (BWP for DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," or the like in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. Since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and the like may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notification of certain information (for example, notification of "being X") does not necessarily have to be notified explicitly, and can be notified implicitly (by, for example, not notifying this certain information or notifying another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

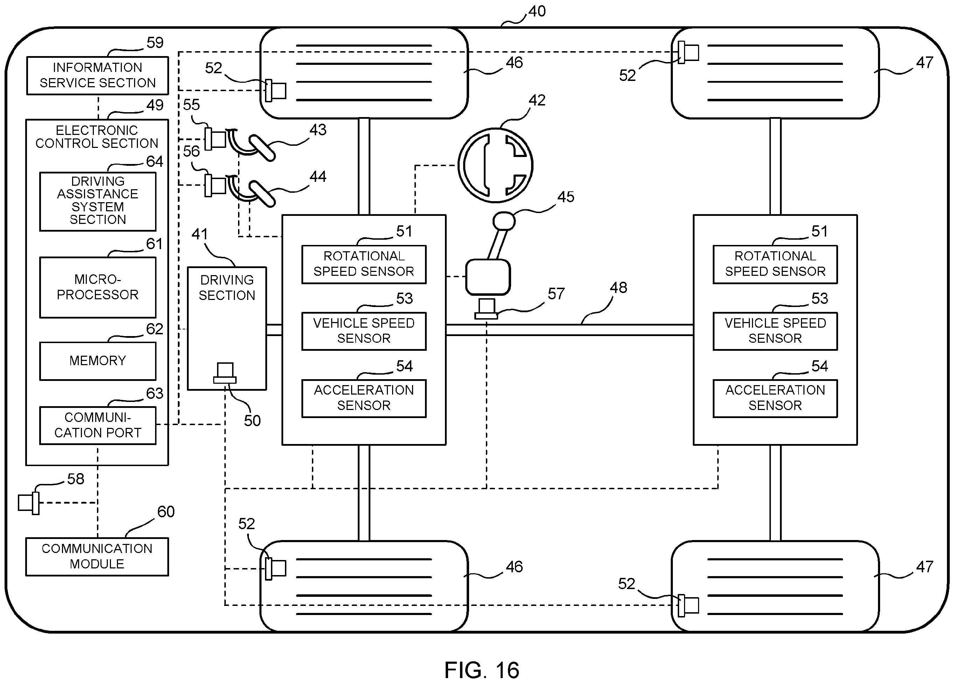

FIG. 16 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of operations. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some operation.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives first configuration information related to a physical uplink control channel (PUCCH), second configuration information related to a physical uplink shared channel (PUSCH), and third configuration information related to uplink simultaneous transmission using multiple panels; and
a control section that controls, based on the first configuration information, the second configuration information, and the third configuration information, assumption related to transmission of the PUSCH and the PUCCH in a same time domain and transmission of at least one of the PUSCH and the PUCCH.

2. The terminal according to claim 1, wherein
in a case that a PUCCH including a positive scheduling request (SR) is configured using the first configuration information and that a PUSCH including no uplink data is configured using the second configuration information, the control section controls transmission of at least one of the PUSCH and the PUCCH based on whether the PUSCH and the PUCCH are associated with an identical panel.

3. The terminal according to claim 1, wherein
in a case that a PUCCH including at least one of a hybrid automatic repeat request acknowledgement (HARQ-ACK), a scheduling request, and first channel state information (CSI) is configured using the first configuration information and that a PUSCH including second CSI is configured using the second configuration information, the control section controls transmission of at least one of the PUSCH and the PUCCH based on whether the PUSCH and the PUCCH are associated with an identical panel.

4. The terminal according to claim 1, wherein
in a case that a plurality of channel state information (CSI) is configured in a same time domain, the control section controls transmission of at least one of the PUSCH and the PUCCH based on values related to priorities for the plurality of CSI and of whether the PUSCH and the PUCCH are associated with an identical panel.

5. A radio communication method for a terminal, comprising:
receiving first configuration information related to a physical uplink control channel (PUCCH), second configuration information related to a physical uplink shared channel (PUSCH), and third configuration information related to uplink simultaneous transmission using multiple panels; and
controlling, based on the first configuration information, the second configuration information, and the third configuration information, assumption related to transmission of the PUSCH and the PUCCH in a same time domain and transmission of at least one of the PUSCH and the PUCCH.

6. A base station comprising:
a transmitting section that transmits first configuration information related to a physical uplink control channel (PUCCH), second configuration information related to a physical uplink shared channel (PUSCH), and third configuration information related to uplink simultaneous transmission using multiple panels; and
a control section that performs indication related to simultaneous transmission of the PUSCH and the PUCCH in a same time domain, by using the first configuration information, the second configuration information, and the third configuration information.
